# DEMANDE DE BREVET EUROPEEN

(11) **EP 4 447 371 A1**
(43) Date de publication de la demande: **16.10.2024**
(21) Numéro de dépôt: 24169365.4
(22) Date de dépôt: 10.04.2024
(51) Int. Cl.: H04L 5/00

(54) **PROCÉDÉ DE CONTRÔLE, ENTITÉ D'UN RÉSEAU DE TÉLÉCOMMUNICATIONS, PROCÉDÉ DE COMMUNICATION ET ÉQUIPEMENT UTILISATEUR**

(30) Priorité: 13.04.2023 FR 2303685
(71) Demandeur: Orange, 92130 Issy-les-Moulineaux (FR)
(72) Inventeur: SAAD, Joe, 92326 Chatillon (FR); YASSIN, Mohamad, 92326 Chatillon (FR); COSTANZO, Salvatore, 92326 Chatillon (FR)

(57) **Abrégé**

L'invention concerne un procédé de contrôle, mis en oeuvre par une entité (2) d'un réseau de télécommunications, d'une fréquence dite de surveillance à laquelle un équipement utilisateur (3) surveille un canal de contrôle susceptible de véhiculer au moins un indicateur de partie de bande passante affectée à cet équipement utilisateur, ce procédé de contrôle comprenant :
- une étape d'ajustement, en fonction d'au moins une caractéristique d'au moins un flux de données à transmettre associé audit équipement utilisateur et relatif à au moins un service offert par le réseau, de ladite fréquence de surveillance ;
- une étape de notification de ladite fréquence de surveillance ajustée audit équipement utilisateur ; et
- une étape d'envoi d'informations destinées à l'équipement utilisateur sur ledit canal de contrôle en fonction de ladite fréquence de surveillance ajustée.

## Description

### Technique antérieure

L'invention appartient au domaine général des télécommunications.

Elle s'inscrit plus particulièrement dans le contexte d'un réseau de télécommunications offrant la possibilité à un équipement utilisateur (ou UE pour « User Equipment » en anglais) de ce réseau de recevoir ou d'émettre des données sur une partie seulement de la bande passante allouée par le réseau à la cellule à laquelle est rattaché cet équipement utilisateur.

Une telle fonctionnalité, également connue sous le nom de BWP pour « BandWidth Part » en anglais, a été introduite notamment dans le contexte d'un réseau 5G (i.e. de 5^{ème} Génération) et plus particulièrement, de la nouvelle interface radio 5G NR (pour « New Radio » en anglais) définie par le standard 3GPP à compter de la Release 15. Elle permet d'adapter dynamiquement la bande passante sur laquelle des données associées à un UE sont transmises (i.e. envoyées ou reçues par l'UE) via le réseau, et incidemment la numérologie utilisée par l'UE sur cette bande. Par numérologie, on entend dans le contexte d'un schéma de transmission de type OFDM (pour « Orthogonal Frequency Division Multiplexing » en anglais) tel que celui adopté par la technologie d'accès radio 5G NR, l'espacement entre les sous-porteuses et la longueur du préfixe cyclique, ou de façon équivalente, la durée d'un symbole OFDM.

L'utilisation d'une unique numérologie comme dans les réseaux 4G ou LTE (pour « Long Term Evolution » en anglais), à savoir un espacement de 15kHZ entre les sous-porteuses et une longueur de préfixe cyclique approximativement de 4.7µs, est difficilement envisageable dans le contexte d'un réseau 5G, en raison notamment des multiples scénarios de déploiement envisagés, que ce soit en termes de dimensions des cellules, des bandes de fréquences allouées, des effets de propagation en résultant (comme par exemple l'étalement des retards (ou « delay spread » en anglais)), des services hétérogènes proposés en 5G (et des contraintes très diverses en découlant), etc. La technologie d'accès radio 5G NR a donc été conçue pour apporter une certaine flexibilité en la matière et supporter plusieurs numérologies pour une même fréquence porteuse, comme illustré dans la table 1 ci-dessous.

**[Table 1]**

| Numérologie µ | 0 | 1 | 2 | 3 | 4 |
|---|---|---|---|---|---|
| Espacement Δf entre les sous-porteuses (SCS ou « SubCarrier Spacing » en anglais) (kHz) | 15 | 30 | 60 | 120 | 240 |
| Durée Tᵤ d'un symbole utile (µs) | 66.7 | 33.3 | 16.7 | 8.33 | 4.17 |
| Longueur T_{CP} approximative du préfixe cyclique (µs) | 4.7 | 2.3 | 1.2 | 0 .5 9 | 0.29 |
| Durée totale Tᵤ+T_{CP} d'un symbole OFDM (µs) | 71.35 | 35.68 | 17.84 | 8.92 | 4.46 |
| Durée d'un slot (14 symboles OFDM) ou TTI (pour « Transmission Time Interval » en anglais) (ms) | 1 | 0.5 | 0.25 | 0.125 | 0.0625 |

L'utilisation de ces multiples numérologies permet avantageusement de répondre aux contraintes diverses et variées (aussi désignées par SLA pour « Service Level Agreement » en anglais) en termes de latence, de débit (ou « throughput » en anglais) et de fiabilité, imposées par les différentes catégories de services que les réseaux 5G permettent d'offrir. Ces différentes catégories de services comprennent notamment :
- des services de type eMBB (pour « enhanced Mobile Broadband » en anglais) s'appuyant sur des débits de données très élevés pour proposer de nouvelles expériences aux utilisateurs (ex. réalité virtuelle, réalité augmentée, diffusion vidéo HD, etc.) ;
- des services de type uRLLC (pour « ultra Reliable Low Latency Communication » en anglais), qui ont des exigences strictes en matière de latence et de fiabilité des communications (ex. services de gestion à distance, robots industriels, téléchirurgie) ;
- des services de type mMTC (pour « massive Machine Type Communication » en anglais), qui incluent notamment l'Internet des Objets (ou « IoT » pour « Internet of Things » en anglais), et qui ont des exigences élevées en termes de densité de déploiement notamment (ex. ville connectée, agriculture connectée, etc.) ;
- des services de type V2X (pour « Vehicle to Everything » en anglais), permettant à un véhicule d'échanger des informations avec un autre véhicule, une infrastructure, au réseau et/ou un piéton. Les services V2X incluent des services de sécurité (ou « safety services » en anglais), qui ont pour but par exemple de minimiser les accidents, les risques des passagers ou des utilisateurs des routes (ex. service d'aide à la conduite ou de conduite autonome), et qui requièrent une latence très faible (inférieure à quelques millisecondes) et une fiabilité de transmission proche de 100%, et des services autres (ou « non-safety services » en anglais) visant davantage à améliorer les conditions de trafic, à minimiser l'influence de la congestion des routes, à améliorer le confort des passagers du véhicule, etc., et qui ont certes besoin de débits de transmission élevés mais peuvent tolérer une certaine latence et une fiabilité moins importante ; et
- des services de type HMTC (pour « High performance Machine Type Communications » en anglais), qui comme pour les services de type mMTC, ont des exigences élevées en termes de densité de déploiement (et donc de disponibilité des ressources pour communiquer), mais également de faible latence et de débits de transmission élevés.

Ainsi, par exemple, comme l'illustre la table 1, une numérologie élevée (par exemple correspondant à un espacement de 120kHz entre les sous-porteuses) permet de réduire la durée d'un intervalle de transmission ou TTI, et incidemment la latence : elle est donc particulièrement bien adaptée aux services uRLLC. A l'inverse, une numérologie moins élevée permet d'atteindre un débit plus élevé et est particulièrement bien adaptée aux services eMBB.

Comme évoqué précédemment, la technologie d'accès radio 5G NR permet à un UE, via la fonctionnalité BWP, d'utiliser une bande passante plus étroite que la bande passante totale allouée par une réseau 5G à la cellule dans laquelle se trouve l'UE. Cette bande passante plus étroite correspond à une partie (désignée par BWP dans la suite) de la bande passante totale allouée par le réseau à la cellule. Compte-tenu des largeurs de bande envisagées en 5G (jusqu'à 400 MHz pour une seule porteuse), le recours à cette fonctionnalité permet avantageusement d'une part, de s'adapter à des UE disposant de capacités réduites en termes de largeur de bande supportée et/ou qu'ils peuvent surveiller, et d'autre part, de réduire la complexité des traitements réalisés par les UE (ex. surveillance et décodage des canaux de contrôle) et ainsi la puissance qu'ils consomment.

Chaque BWP est caractérisée par une numérologie (espacement de sous-porteuse et longueur de préfixe cyclique) et par un nombre de blocs physiques de ressources ou PRB (pour « Physical Resource Block » en anglais) consécutifs respectant cette numérologie. Elle commence à un certain bloc de ressource commun (ou CRB pour « Common Ressource Block » en anglais) dont l'emplacement est identifié par rapport à un CRB servant de référence à toutes les numérologies, aussi appelé point de référence A (ou « Reference point A » en anglais). Des BWP différentes peuvent utiliser la même numérologie mais avoir des largeurs de bande différentes.

Il convient de noter que dans le contexte 5G NR, un bloc de ressource RB ou « Resource Block » (tel qu'un PRB ou un CRB) est un élément défini dans le domaine fréquentiel et constitué de 12 sous-porteuses consécutives. L'étalement fréquentiel d'un RB dépend donc de la numérologie considérée : ainsi par exemple, 2 RB consécutifs pour une numérologie basée sur un espacement Δf entre les sous-porteuses occupent la même bande de fréquences qu'un RB pour une numérologie basée sur un espacement 2Δf entre les sous-porteuses. Un PRB est donc la plus petite unité radio attribuée à un UE dans le contexte 5G NR.

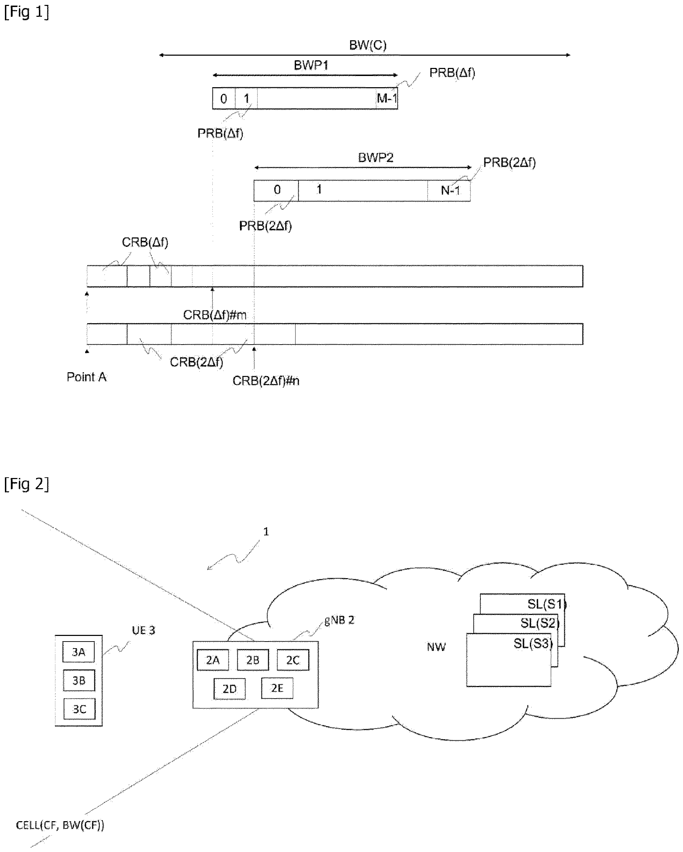

La **figure 1** illustre de façon schématique la notion de BWP. Sur cette figure, on considère deux parties de bande passante notées BWP1 et BWP2, définies au sein de la bande passante BW associée à une porteuse C allouée à une cellule d'un réseau 5G. Les parties de bande BWP1 et BWP2 sont, dans l'exemple de la figure 1, associées respectivement à deux numérologies distinctes correspondant à des espacements respectifs entre les sous-porteuses Δf et 2Δf. On note PRB(Δf), respectivement CRB(Δf), et PRB(2Δf), respectivement CRB(2Δf), les PRB, respectivement les CRB, correspondant aux espacements Δf et 2Δf entre les sous porteuses. La partie de bande BWP1 commence au bloc CBR(Δf)#m, par rapport au point de référence A, et est constituée de M PRB(Δf) consécutifs correspondant à un espacement Δf entre les sous-porteuses ; la partie de bande BWP2 commence au bloc CBR(2Δf)#n et est constituée de N PRB(2Δf) consécutifs correspondant à un espacement 2Δf entre les sous-porteuses, M et N désignant deux entiers supérieurs ou égaux à 1.

Conformément au standard 3GPP, au niveau d'un UE, quatre BWP peuvent être configurées en voie descendante (ou DL pour « DownLink » en anglais) et quatre BWP peuvent être configurées en voie montante (ou UL pour « UpLink » en anglais) pour des transmissions de données associées à l'UE. L'expression « transmission de données associées à l'UE » couvre ici de manière générale la réception de données par l'UE et/ou l'émission de données par l'UE.

En fonction du ou des services utilisés par un UE, l'activation d'une BWP peut s'avérer plus pertinente qu'une autre, notamment en raison de la numérologie associée à cette BWP. En effet, comme souligné précédemment, les numérologies plus élevées sont particulièrement bien adaptées aux services requérant des latences faibles, comme par exemple les services uRLLC, tandis que les numérologies moins élevées sont plus adaptées aux services eMBB requérant de très hauts débits. Il n'est donc pas optimal d'utiliser une même numérologie pour deux services présentant des contraintes (ou SLA) différentes.

Or un UE d'un réseau 5G peut être connecté simultanément à des services différents. Le standard 3GPP a par exemple introduit la notion de « network slicing » en anglais (ou découpage d'un réseau en tranches) selon laquelle un réseau physique 5G peut être découpé en plusieurs tranches logiques (ou « slices » en anglais), chaque tranche logique étant associée à un service distinct, caractérisé par un SLA qui lui est propre, et disposant de ressources radio dédiées. Un même UE peut être connecté à 8 tranches de réseau simultanément et donc accéder simultanément à des services distincts. Il convient de noter qu'un UE d'un réseau 5G peut être connecté à plusieurs services distincts y compris en l'absence de network slicing.

Le document US 10,880,949 propose un mécanisme de signalisation permettant l'activation en parallèle de plusieurs BWP (pour une utilisation simultanée ou se chevauchant dans le temps) au niveau d'un UE. Une telle activation permet avantageusement de gérer la connexion simultanée d'un UE à plusieurs services, par exemple en configurant des BWP distinctes pour des services ayant des contraintes différentes. Grâce à ce mécanisme, la latence est réduite et les interruptions de service sont limitées. Toutefois, ce mécanisme est incompatible avec certaines limitations imposées par le standard 3GPP aux UE dans le cadre de la fonctionnalité BWP.

En effet, conformément au standard 3GPP, bien que plusieurs BWP puissent être configurées au niveau de l'UE, une seule BWP peut être active (autrement dit, utilisée pour la transmission de données associées à l'UE) à un instant donné en UL ou en DL. Un UE peut toutefois basculer d'une BWP à une autre, autrement dit activer une nouvelle BWP en remplacement de la BWP active courante. Un tel basculement peut être décidé par le réseau (station de base à laquelle est rattaché l'UE), par exemple en vue de satisfaire les exigences de qualité de service (QoS pour « Quality of Service » en anglais) d'un nouveau service requis par l'UE, la nouvelle BWP étant considérée comme mieux adaptée en raison de sa numérologie que la BWP active courante pour transmettre les flux de données relatifs à ce service. Un tel basculement est déclenché par l'envoi par la station de base, sur un canal de contrôle PDCCH (pour « Physical Downlink Control CHannel » en anglais), d'une information de contrôle DCI (pour « Downlink Control Information » en anglais) destinée à l'UE, au format 0_1 (pour l'UL) ou 1_1 (pour le DL), et comprenant un indicateur de BWP (ou « Bandwidth Part indicator » en anglais) désignant la nouvelle BWP à activer par l'UE. Le canal de contrôle PDCCH est émis en broadcast par la station de base sur la cellule qu'elle couvre ; l'UE est configuré par l'opérateur du réseau pour surveiller de façon périodique ce canal de contrôle PDCCH, afin de détecter les informations envoyées par la station de base le concernant (et notamment les informations de contrôle DCI et le cas échéant, les indicateurs de BWP désignant les BWP qu'il doit activer).

Le document de K. Boutiba et al., intitulé « Radio Resource Management in Multi-numerology 5G New Radio featuring Network Slicing », IEEE International Conférence on Communications (ICC), mai 2022, propose un algorithme basé sur un apprentissage par renforcement profond (ou DRL pour « Deep Reinforcement Learning ») permettant d'allouer des ressources à des UE connectés à plusieurs tranches de réseau associées à des SLA différents et de multiplexer les numérologies qui leur sont attribuées, tout en s'assurant qu'une unique BWP est active à un instant donné au niveau d'un UE. Pour tenir compte de la connexion d'un UE à plusieurs tranches de réseau, celui-ci est modélisé comme une pluralité d'UE virtuels, chaque UE virtuel étant connecté à une unique tranche de réseau ; en outre, deux contraintes sont imposées aux ressources temporelles allouées aux UE virtuels associé à un même UE, à savoir qu'elles doivent utiliser la même numérologie et ne pas se recouper.

Cet algorithme ne permet donc pas d'associer des numérologies différentes à des services différents auxquels un UE est connecté. Or comme souligné précédemment, l'utilisation d'une même numérologie pour des services ayant des exigences en matière de qualité de service ou des priorités différentes n'est pas optimale.

En outre, la modélisation sur laquelle repose l'algorithme ne tient pas compte des délais requis pour affecter les ressources aux UE et leur signaler le cas échéant les changements de BWP.

Il existe donc un besoin d'un mécanisme permettant de mettre en oeuvre efficacement une fonctionnalité BWP telle que définie par le standard 3GPP, dans un réseau offrant la possibilité à un équipement utilisateur d'être connecté à plusieurs services hétérogènes ayant typiquement des priorités et/ou des exigences distinctes en matière de qualité de service.

### Exposé de l'invention

L'invention permet notamment de répondre à ce besoin en proposant un procédé de contrôle, par une entité d'un réseau de télécommunications, d'une fréquence dite de surveillance à laquelle un équipement utilisateur surveille un canal de contrôle susceptible de véhiculer au moins un indicateur de partie de bande passante affectée audit équipement utilisateur, ledit procédé de contrôle comprenant :
- une étape d'ajustement, en fonction d'au moins une caractéristique d'au moins un flux de données à transmettre associé audit équipement utilisateur et relatif à au moins un service offert par le réseau, de ladite fréquence de surveillance ;
- une étape de notification de ladite fréquence de surveillance ajustée audit équipement utilisateur ; et
- une étape d'envoi d'informations destinées à l'équipement utilisateur sur ledit canal de contrôle en fonction de ladite fréquence de surveillance ajustée.

Corrélativement, l'invention vise également une entité d'un réseau de télécommunications comprenant :
- un module d'ajustement, configuré pour ajuster en fonction d'au moins une caractéristique d'au moins un flux de données à transmettre associé à un équipement utilisateur et relatif à au moins un service offert par ledit réseau, une quantité représentative d'une fréquence de surveillance d'un canal de contrôle susceptible de véhiculer au moins un indicateur de partie de bande passante affectée audit équipement utilisateur ;
- un module de notification, configuré pour notifier ladite fréquence de surveillance ajustée audit équipement utilisateur ; et
- un module d'envoi, configuré pour envoyer des informations destinées à l'équipement utilisateur sur ledit canal de contrôle en fonction de ladite fréquence de surveillance ajustée.

L'entité du réseau de télécommunications est par exemple une station de base du réseau (aussi appelée gNB dans le contexte d'un réseau 5G). Il peut s'agir d'une entité matérielle ou d'une entité logicielle, qui peut être répartie sur une ou plusieurs fonctions réseaux ou être hébergée par un ou plusieurs équipements matériels.

L'invention propose donc d'ajuster dynamiquement la fréquence de surveillance par l'équipement utilisateur du canal de contrôle qui véhicule les informations relatives aux BWP à activer au niveau de l'équipement utilisateur pour transmettre le trafic (trafic UL ou trafic DL) relatif aux services auxquels cet équipement utilisateur est connecté, et d'exploiter cette fréquence de surveillance ajustée pour transmettre ces informations. Par « ajuster la fréquence de surveillance du canal de contrôle par l'équipement utilisateur », on entend qu'on ajuste le nombre de fois où l'équipement utilisateur réalise cette surveillance dans un temps donné. Peu importe pour l'invention le paramètre sur lequel on intervient pour ajuster cette fréquence de surveillance. Ainsi, lorsque la surveillance est périodique, il peut s'agir de la période avec laquelle la surveillance est réitérée dans le temps, ou de l'inverse de cette période, etc.

Aucune limitation n'est attachée au nombre ni aux types de services auxquels se rapporte le trafic. Ainsi, par exemple, ledit au moins un service offert par le réseau peut comprendre au moins un service parmi :
- un service « ultra Reliable Low Latency Communication », uRLLC ;
- un service « enhanced Mobile BroadBand », eMBB ;
- un service « massive Machine Type Communication », mMTC ;
- un service « Vehicule to Everything », V2X ;
- un service « High performance Mobile Type Communication », HMTC.

Ces services sont définis par le standard 3GPP, et correspondent à des contraintes diverses et variées en termes de latence, de fiabilité, etc., comme évoqué précédemment. Bien entendu, l'invention ne se limite pas à ces services, et d'autres services, de manière alternative ou complémentaire, peuvent être envisagés dans le contexte de l'invention, avec des contraintes similaires ou identiques, ou avec des contraintes différentes de celles des services précités.

L'ajustement proposé par l'invention est réalisé avantageusement en tenant compte des caractéristiques de ce trafic (typiquement des services auxquels se rapporte ce trafic, de la priorité accordée à ces services ou à ces flux, de la latence supportée par ces services ou par ces flux, de la volumétrie à transmettre, etc.). Il est donc adapté à l'équipement utilisateur en question. Les caractéristiques du trafic associé à l'équipement utilisateur permettent à l'entité du réseau d'estimer si des informations destinées à l'équipement utilisateur doivent être envoyées sur le canal de contrôle en vue d'une optimisation de la transmission de ce trafic, et le cas échéant, de contrôler le timing dans lequel ces informations peuvent être envoyées à l'équipement utilisateur puis détectées et prises en compte par celui-ci.

Typiquement, ces informations destinées à l'équipement utilisateur peuvent comprendre au moins un indicateur de BWP affectée par l'entité du réseau à l'équipement utilisateur (en vue par exemple d'optimiser la transmission du trafic associé à l'équipement utilisateur) à activer pour la transmission du trafic associé à l'équipement utilisateur (flux de données entrant(s) ou sortant(s)).

Ainsi l'invention permet de bénéficier de la fréquence de surveillance et de la fréquence d'envoi ajustées pour notifier à l'équipement utilisateur un changement de BWP. L'entité du réseau peut, grâce à l'invention, contrôler et adapter le moment où l'équipement utilisateur est notifié de la BWP qu'il doit activer en fonction de l'urgence et des contraintes du trafic associé à cet équipement utilisateur.

Par exemple, dans un mode particulier de réalisation, l'étape d'ajustement comprend une augmentation de la fréquence de surveillance lorsqu'au moins deux parties de bande distinctes sont affectées audit équipement utilisateur pour une transmission dudit au moins un flux de données et lorsqu'au moins un dit service et/ou au moins un dit flux de données est identifié comme prioritaire ou associé à une latence maximale inférieure à un seuil donné.

A l'inverse, dans un mode de réalisation, l'étape d'ajustement comprend une diminution de la fréquence de surveillance lorsqu'une condition est vérifiée parmi :
- une même partie de bande est affectée audit équipement utilisateur pour une transmission dudit au moins un flux de données ;
- ledit au moins un service comprend uniquement un ou des services identifiés comme non prioritaires ou associés à une latence maximale supérieure à un seuil donné ;
- ledit au moins un flux comprend uniquement un ou des flux identifiés comme non prioritaires ou associés à une latence maximale supérieure à un seuil donné.

Typiquement, un service, respectivement un flux de données, identifié comme prioritaire est un service, respectivement un flux de données, qui a souvent de fortes exigences en termes de latence (par exemple supportant une latence maximale inférieure à 1ms), comme par exemple un service uRLLC ou V2X, ou un flux QoS de type Delay Critical GBR (pour « Guaranteed Bit Rate » en anglais).

En effet, lorsque tout ou partie du trafic associé à un équipement utilisateur est relatif à un service identifié comme prioritaire ou tolérant une faible latence, il est souhaitable que le basculement vers une BWP adaptée à ce type de service (ex. associée à une numérologie élevée) puisse se faire dans les meilleurs délais afin de réduire la latence et de limiter les risques d'interruption de ce service. Ce constat est également valable pour un flux de données prioritaire ou tolérant une faible latence, y compris lorsque celui-ci se rapporte à un service non prioritaire. A cet effet, l'entité du réseau peut alors avantageusement, lors de l'étape d'ajustement, augmenter la fréquence de surveillance du canal de contrôle pour que l'équipement utilisateur puisse être informé dès que possible de la BWP qui lui est affectée pour ce service ou ce flux prioritaire et l'activer sans délai indu.

A l'inverse, si le trafic associé à l'équipement utilisateur ne concerne pas de service ou de flux prioritaire ou ayant des exigences élevées en termes de latence (par exemple un service eMBB), ou encore s'il ne requiert pas de changement de BWP, l'entité du réseau peut, lors de l'étape d'ajustement, diminuer la fréquence de surveillance afin de limiter la puissance consommée par l'équipement utilisateur et préserver les ressources du réseau.

L'invention permet donc une gestion optimisée et efficace de la fonctionnalité BWP, notamment dans un contexte où un changement de BWP est envisagé. Elle a une application privilégiée mais non limitative lorsque l'équipement utilisateur est connecté à plusieurs services ayant des contraintes hétérogènes ou des priorités différentes, car elle offre la possibilité à l'opérateur du réseau d'activer sans latence une BWP adaptée à chaque service en vue d'optimiser la transmission du trafic associé à l'équipement utilisateur.

Par ailleurs, l'invention apporte un gain substantiel par rapport à l'état de la technique, selon lequel le canal de contrôle véhiculant les indicateurs de BWP est surveillé de façon périodique par l'équipement utilisateur avec une période fixe, configurée par l'opérateur du réseau au niveau de l'équipement utilisateur, via un message RRC (pour « Radio Resource Control » en anglais) envoyé par la station de base lors de l'établissement de la connexion de l'équipement utilisateur avec le réseau. Une telle période est appliquée à l'ensemble des équipements utilisateurs rattachés à la station de base, et est typiquement fixée par l'opérateur égale à plusieurs slots (ex. 5 ou 8 slots) ou TTI, ce qui pour la numérologie µ=0 représente plusieurs millisecondes. On comprend bien dès lors que si un changement de BWP est décidé par la station de base pour transmettre des flux de données associés à un équipement utilisateur relatifs à un service uRLLC, imposant une latence inférieure à une milliseconde, la station de base doit attendre l'envoi du prochain canal de contrôle comportant des informations destinées à l'équipement utilisateur pour lui transmettre cette instruction, donc potentiellement plusieurs millisecondes selon la valeur de la période configurée par l'opérateur, ce qui peut s'avérer préjudiciable pour la qualité du service uRLLC.

Au contraire dans l'invention, la fréquence de surveillance du canal de contrôle et la fréquence d'envoi des informations destinées à l'équipement utilisateur sur ce canal de contrôle (incluant le cas échéant les indicateurs de BWP) sont paramétrables et sont adaptées à chaque équipement utilisateur, en fonction de son trafic et des services auxquels il est connecté. L'invention offre la possibilité de réaliser aisément un compromis entre latence et puissance consommée par l'équipement utilisateur et de satisfaire les contraintes diverses et variées des services auxquels un utilisateur est susceptible d'accéder.

En outre, elle est relativement simple à mettre en oeuvre puisqu'elle s'appuie sur la modification de la fréquence de surveillance du canal de contrôle par l'équipement utilisateur, qui peut être aisément configurée par l'opérateur du réseau, par exemple via un message RRC. Elle est également compatible avec la contrainte imposée par le standard 3GPP selon laquelle un équipement utilisateur ne peut avoir qu'une unique BWP active à un instant donné (il convient toutefois de noter que l'invention s'applique également en l'absence de cette contrainte), et permet, sous cette contrainte, d'optimiser la transmission du trafic associé à un équipement utilisateur connecté à de multiples services.

L'invention a par conséquent une application privilégiée dans le contexte d'un réseau 5G NR tel que précédemment décrit. Dans ce contexte, elle revient à ajuster dynamiquement la période de la surveillance périodique effectuée par l'équipement utilisateur du canal PDCCH diffusé par la station de base sur la cellule, et à exploiter cette période ajustée pour envoyer de manière plus efficace les informations de contrôle DCI à l'équipement utilisateur dans le canal PDCCH. La flexibilité offerte par l'invention la rend particulièrement bien adaptée dans le contexte d'un réseau 5G mettant en oeuvre du network slicing, dans lequel une pluralité de tranches de réseau peut être utilisée pour offrir une pluralité de services aux utilisateurs du réseau.

Toutefois, l'invention s'applique dans d'autres contextes et à d'autres architectures de réseau, comme par exemple dans un réseau de future génération (6G, etc.), ou un réseau propriétaire, ou une architecture Open-RAN telle que définie par l'Alliance O-RAN, implémentant une fonctionnalité BWP et dans lequel un équipement utilisateur est susceptible d'être connecté simultanément à plusieurs services. Dans le contexte d'une architecture de réseau Open-RAN, le procédé de contrôle selon l'invention peut être mis en oeuvre par un contrôleur de type near-RT RIC (pour « near-Real Time RAN Intelligent Controller » en anglais), par exemple dans une application logicielle aussi connue sous le nom de xAPP (entité du réseau conforme à l'invention).

Il convient par ailleurs de noter que l'invention s'applique aussi bien en voie montante (UL), pour favoriser la transmission de flux sortants de l'équipement utilisateur, qu'en voie descendante (DL), pour favoriser la transmission de flux entrants de l'équipement utilisateur, et ce quel que soit le schéma de multiplexage des ressources envisagé dans le réseau entre les voies UL et DL (par exemple, multiplexage en temps ou TDD pour « Time Division Multiplexing » en anglais, ou multiplexage en fréquence ou FDD pour « Frequency Division Multiplexing » en anglais). L'invention est appliquée individuellement sur chaque voie. Dans l'hypothèse où le même canal de contrôle véhicule des informations concernant la voie montante et la voie descendante, et un ajustement différent de la fréquence de surveillance est retenu pour la voie montante et pour la voie descendante, c'est alors la fréquence de surveillance la plus élevée parmi les deux fréquences de surveillance ajustées qui est retenue pour être appliquée par l'équipement utilisateur.

Dans un mode particulier de réalisation, ladite au moins une caractéristique de flux prise en compte par l'entité du réseau lors de l'étape d'ajustement peut comprendre, pour un dit flux de données associé à un dit service :
- une volumétrie dudit flux de données ; et/ou
- des informations relatives à un ordonnancement des paquets de données véhiculés par ledit flux de données et à une partie de bande passante affectée audit service pour une transmission desdits paquets de données ; et/ou
- une priorité associée audit flux de données et/ou une latence maximale associée audit flux de données ; et/ou
- une priorité associée audit service ; et/ou
- une tranche du réseau associé audit service.

De telles caractéristiques reflètent avantageusement la volumétrie du trafic entrant ou sortant, l'ordonnancement de ce trafic, et les services auxquels l'équipement utilisateur est connecté ainsi que leurs contraintes et leurs priorités. Ce type de caractéristiques peut avoir une influence sur la façon dont est organisée la transmission du trafic en vue de son optimisation, et permet ainsi à l'entité d'ajuster de façon éclairée la fréquence de surveillance. Bien entendu, ces exemples de caractéristiques de flux ne sont pas limitatifs en soi et d'autres caractéristiques peuvent être considérées. En outre, les caractéristiques prises en compte lors de l'étape d'ajustement peuvent être des caractéristiques représentatives du trafic réel associé à l'équipement utilisateur, ou consister en une estimation ou une prédiction de ce trafic.

Dans un mode particulier de réalisation, les étapes d'ajustement de la fréquence de surveillance, de notification de la période de surveillance ajustée et d'envoi sont réitérées périodiquement.

Par exemple, l'ajustement de la fréquence de surveillance peut être révisé toutes les trames (c'est-à-dire toutes les 10ms dans le contexte d'un réseau 5G NR).

La période (appelée période d'ajustement) avec laquelle sont réitérées les étapes d'ajustement, de notification et d'envoi, peut conditionner notamment la durée sur laquelle les caractéristiques du trafic associé à l'équipement utilisateur sont considérées pour ajuster la fréquence de surveillance.

Ce mode de réalisation offre une flexibilité supplémentaire : il permet de réviser si besoin l'ajustement appliqué à la fréquence de surveillance en fonction de l'évolution du trafic et le cas échéant des services auxquels l'équipement utilisateur est connecté, l'apparition de trafic, etc.

On peut par ailleurs envisager, dans un mode particulier de réalisation, d'avoir une période d'ajustement configurable par l'entité du réseau, par exemple en fonction du contexte dans lequel se trouve l'équipement utilisateur (ex. de sa localisation) ou des services auxquels il est connecté.

En variante, les étapes d'ajustement de la fréquence de surveillance, de notification et d'envoi peuvent être déclenchées sur détection d'un événement particulier, comme par exemple, la connexion de l'équipement utilisateur à un nouveau service.

Dans un mode particulier de réalisation, lors de l'étape d'ajustement, la fréquence de surveillance est ajustée en outre en fonction d'au moins un indicateur de performance (ou KPI pour « Key Performance Indicator » en anglais) dudit équipement utilisateur et/ou du réseau.

Ledit au moins un indicateur de performance peut comprendre par exemple :
- une puissance consommée par ledit équipement utilisateur ; et/ou
- un débit ou une latence de bout-en-bout du réseau.

Ainsi, par exemple, l'augmentation ou la réduction de la période de surveillance peut être évaluée (dimensionnée) en fonction d'au moins un tel indicateur de performance dudit équipement utilisateur et/ou du réseau. La prise en compte de tels indicateurs de performance permet de réaliser des compromis lors de l'ajustement de la période de surveillance, sans sacrifier les KPI de l'équipement utilisateur et/ou du réseau qui sont susceptibles d'affecter l'expérience utilisateur et/ou qui jouent un rôle important pour l'opérateur du réseau. Il en résulte une implémentation optimisée de la fonctionnalité BWP dans le réseau.

A titre illustratif, une augmentation de la fréquence de surveillance peut être conditionnée par la puissance consommée par l'équipement utilisateur. En effet, une augmentation de la fréquence de surveillance va se traduire par une augmentation de l'activité de l'équipement utilisateur, qui doit être en mesure d'écouter et de traiter les informations plus fréquentes qui lui sont envoyées, et donc incidemment, par une augmentation de la puissance consommée par celui-ci. Il convient par conséquent de veiller à ce que cette augmentation de la puissance se fasse dans des limites raisonnables et acceptables pour l'équipement utilisateur, afin d'économiser ses ressources, et notamment sa batterie.

Comme mentionné précédemment, les caractéristiques de flux prises en compte pour l'ajustement de la fréquence de surveillance peuvent être des caractéristiques réelles de ces flux, ou résulter d'estimation ou de prédiction. Elles peuvent en outre être déterminées par l'entité du réseau à partir d'informations collectées auprès de différentes sources.

Ainsi, dans un mode particulier de réalisation, le procédé de contrôle comprend en outre une étape d'estimation de ladite au moins une caractéristique dudit au moins un flux de données à transmettre associé audit équipement utilisateur à partir d'au moins un paramètre parmi :
- au moins un identifiant d'au moins une tranche de réseau à laquelle est attaché ledit équipement utilisateur ou autorisée pour ledit équipement utilisateur, et/ou au moins un service auquel est connecté ledit équipement utilisateur ou autorisé à se connecter ; et
- au moins une information fournie par ledit équipement utilisateur..

Ce mode de réalisation s'appuie avantageusement sur des informations déjà connues ou remontées au réseau pour obtenir une prédiction fiable et précise des caractéristiques du trafic à transmettre associé à un équipement utilisateur et ajuster au mieux la fréquence de surveillance du canal de contrôle et la fréquence d'envoi d'informations destinées à l'équipement utilisateur dans ce canal de contrôle.

Dans un mode particulier de réalisation, le procédé de contrôle comprend en outre une étape d'apprentissage d'un modèle de prédiction de trafic pour ledit équipement utilisateur, ledit modèle de prédiction étant utilisé par ladite entité du réseau pour déterminer ladite au moins une caractéristique dudit au moins un flux à transmettre associé audit équipement utilisateur.

Aucune limitation n'est attachée à la nature du modèle de prédiction appris lors de l'étape d'apprentissage et utilisé pour déterminer les caractéristiques du trafic associé à l'équipement utilisateur. Par exemple, ce modèle de prédiction peut s'appuyer sur un réseau de neurones, sur un algorithme d'apprentissage par renforcement ou par renforcement profond, sur un modèle mathématique ou sur une heuristique, etc.

Au vu de ce qui précède, l'invention s'appuie sur l'entité du réseau mettant en oeuvre le procédé de contrôle selon l'invention pour ajuster la fréquence de surveillance du canal de contrôle et la fréquence d'envoi d'informations dans ce canal de contrôle destinées à l'équipement utilisateur, mais également sur l'équipement utilisateur lui-même.

Ainsi, selon un autre aspect, l'invention vise également un procédé de communication par un équipement utilisateur d'un réseau de télécommunications, ce procédé comprenant :
- une étape de réception d'une notification d'une fréquence dite de surveillance à laquelle ledit équipement utilisateur surveille un canal de contrôle, ajustée par une entité du réseau conformément à une étape d'ajustement d'un procédé de contrôle selon l'invention, ledit canal de contrôle étant susceptible de véhiculer au moins un indicateur de partie de bande passante affectée audit équipement utilisateur ; et
- une étape de surveillance dudit canal de contrôle conformément à ladite fréquence de surveillance ajustée.

Corrélativement, l'invention concerne aussi un équipement utilisateur d'un réseau de télécommunications comprenant :
- un module de réception, configuré pour recevoir une notification d'une fréquence dite de surveillance à laquelle ledit équipement utilisateur surveille un canal de contrôle, ajustée par un module d'ajustement d'une entité du réseau selon l'invention, ledit canal de contrôle étant susceptible de véhiculer au moins un indicateur de partie de bande passante affectée audit équipement utilisateur; et
- un module de surveillance, configuré pour surveiller ledit canal de contrôle conformément à ladite fréquence de surveillance ajustée.

Dans un mode particulier de réalisation, le procédé de communication selon l'invention comprend en outre lors de ladite étape de surveillance, une détection dans ledit canal de contrôle d'au moins un indicateur de partie de bande affectée à l'équipement utilisateur à activer.

Dans un mode particulier de réalisation du procédé de communication, ladite notification est un message de configuration RRC, Radio Resource Control, envoyé par l'entité du réseau et comprenant une valeur d'une période avec laquelle réitérer la surveillance du canal de contrôle.

Le procédé de communication et l'équipement utilisateur selon l'invention bénéficient des mêmes avantages cités précédemment que le procédé de contrôle et l'entité du réseau.

Dans un mode particulier de réalisation, les procédés de contrôle et de communication sont mis en oeuvre par un ordinateur.

L'invention vise également un programme d'ordinateur sur un support d'enregistrement, ce programme étant susceptible d'être mis en oeuvre dans un ordinateur ou plus généralement dans une entité d'un réseau de télécommunications conforme à l'invention et comportant des instructions adaptées à la mise en oeuvre d'un procédé de contrôle tel que décrit ci-dessus.

L'invention vise également un programme d'ordinateur sur un support d'enregistrement, ce programme étant susceptible d'être mis en oeuvre dans un ordinateur ou plus généralement dans un équipement utilisateur conforme à l'invention et comportant des instructions adaptées à la mise en oeuvre d'un procédé de communication tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'information ou un support d'enregistrement lisibles par un ordinateur, et comportant des instructions d'un programme d'ordinateur tel que mentionné ci-dessus.

Le support d'information ou d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple un disque dur, ou une mémoire flash.

D'autre part, le support d'information ou d'enregistrement peut être un support transmissible tel qu'un signal électrique ou optique, qui peut être acheminé via un câble électrique ou optique, par lien radio, par lien optique sans fil ou par d'autres moyens.

Le programme selon l'invention peut être en particulier téléchargé sur un réseau de type Internet.

Alternativement, le support d'information ou d'enregistrement peut être un circuit intégré dans lequel un programme est incorporé, le circuit étant adapté pour exécuter ou pour être utilisé dans l'exécution des procédés de contrôle et de communication selon l'invention.

Selon un autre, l'invention vise également un système de communication comprenant :
- au moins une entité d'un réseau de télécommunications conforme à l'invention ; et
- au moins un équipement utilisateur conforme à l'invention, rattaché à ladite au moins une entité du réseau.

On peut également envisager, dans d'autres modes de réalisation, que les procédés de contrôle et de communication, l'entité du réseau, l'équipement utilisateur et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1, déjà décrite, représente des parties de bande passante (ou BWP) définies à partir d'une bande passante nominale allouée à un réseau ;
[Fig. 2] la figure 2 représente un système de communication dans un réseau de télécommunications, conforme à l'invention, dans un mode particulier de réalisation ;
[Fig. 3] la figure 3 représente schématiquement l'architecture matérielle d'un ordinateur sur laquelle s'appuient une entité du réseau et un équipement utilisateur conformes à l'invention, appartenant au système de communication de la figure 2 ;
[Fig. 4] la figure 4 représente, sous forme d'ordinogramme, les principales étapes d'un procédé de contrôle selon l'invention, telles qu'elles sont mises en oeuvre par une entité du réseau conforme à l'invention appartenant au système de communication de la figure 2 ;
[Fig. 5] la figure 5 représente, sous forme d'ordinogramme, les principales étapes d'un procédé de communication selon l'invention, telles qu'elles sont mises en oeuvre par un équipement utilisateur conforme à l'invention appartenant au système de communication de la figure 2 ;
[Fig. 6] ;

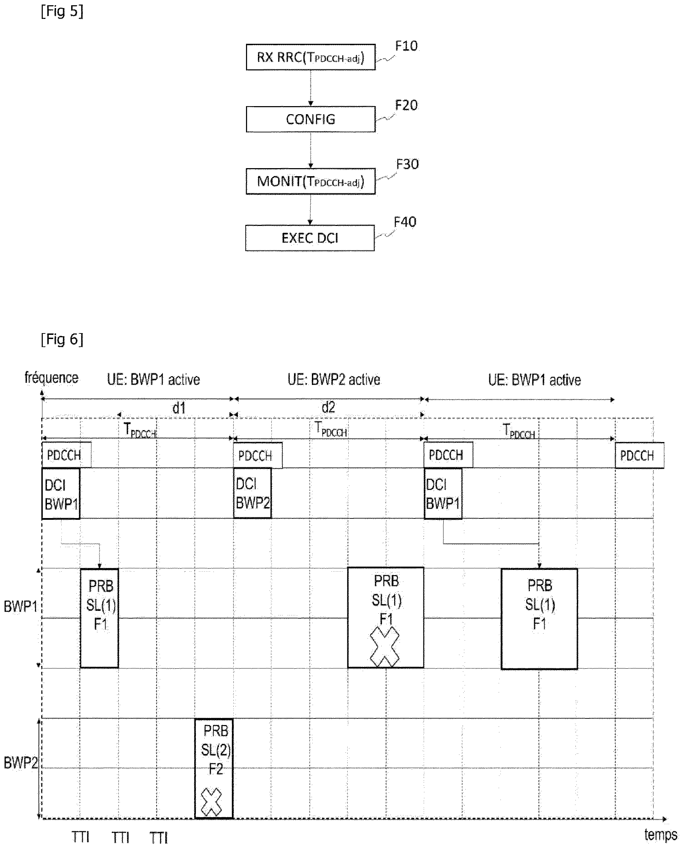

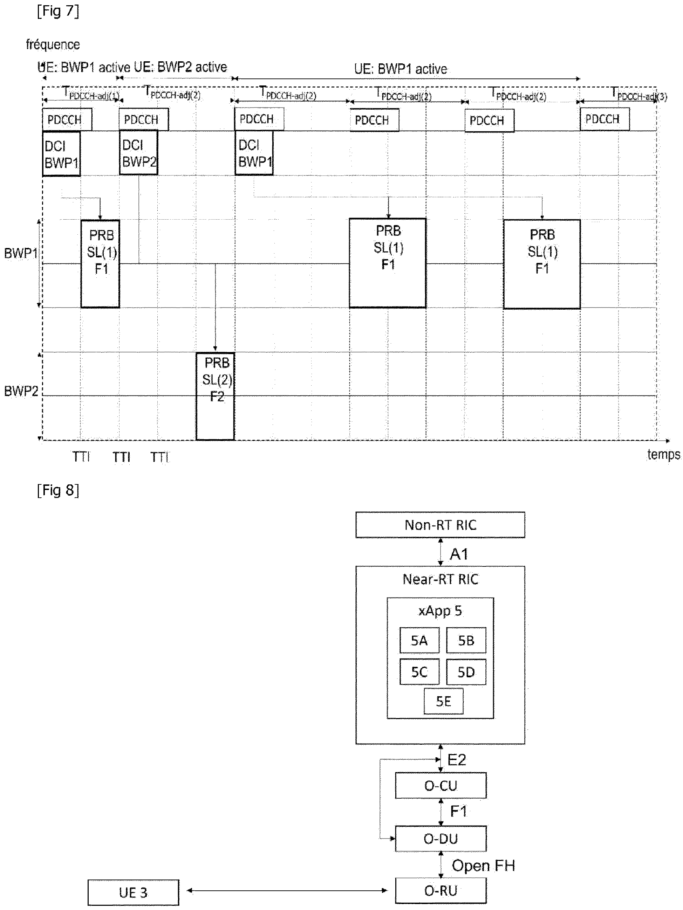

[Fig. 7] Les figures 6 et 7 illustrent sur un exemple le gain apporté par l'invention (figure 6 : sans l'invention ; figure 7 : avec l'invention) ; et
[Fig. 8] La figure 8 représente un mode de réalisation de l'invention s'appuyant sur une architecture Open-RAN.

### Description de l'invention

La **figure 2** représente, dans son environnement, un système 1 de communication, conforme à l'invention dans un mode particulier de réalisation.

Dans ce mode de réalisation, le système 1 comprend :
- au moins une entité 2 d'un réseau de télécommunications NW, conforme à l'invention ; et
- au moins un équipement utilisateur ou UE 3 du réseau de télécommunications NW, rattaché à ladite au moins une entité 2, et conforme à l'invention.

Dans la suite de la description et sur la figure 2, par souci de simplification, on considère une seule entité 2 et un seul équipement utilisateur 3 rattaché à cette entité 2.

Dans l'exemple de la figure 2, le réseau de télécommunications NW est un réseau 5G NR tel que défini par le standard 3GPP (aux adaptations près nécessaires à la mise en oeuvre de l'invention, décrites ci-après). Il met en oeuvre notamment la fonctionnalité BWP évoquée précédemment, permettant à un équipement utilisateur de n'utiliser qu'une partie de la bande passante totale allouée à la cellule à laquelle il est rattaché, que ce soit en DL pour recevoir des données et/ou en UL pour émettre des données.

Dans ce contexte, l'entité 2 conforme à l'invention est une station de base (aussi appelée gNode B ou gNB) du réseau NW, couvrant au moins une cellule CELL du réseau NW à laquelle l'UE 3 est rattaché et via laquelle l'UE 3 peut accéder aux services offerts par le réseau NW. On suppose ici que la cellule CELL est configurée avec au moins une fréquence porteuse CF à laquelle l'opérateur du réseau NW a alloué une bande passante BW(CF). Ainsi, la fonctionnalité BWP permet à l'UE 3 d'utiliser en transmission (en DL ou en UL) une partie seulement (BWP) de la bande passante BW(CF) associée à une certaine numérologie µ, lorsqu'il est rattaché à la cellule CELL. L'UE 3 est informé de la BWP (et de la numérologie associée) qui lui a été affectée par la gNB 2 et qu'il doit utiliser (i.e. activer) à un instant donné par l'intermédiaire d'informations de contrôle DCI destinées à l'UE 3 et envoyées par la gNB 2 dans un canal de contrôle PDCCH (diffusé en broadcast sur la cellule CELL).

Les informations de contrôle DCI véhiculées dans les canaux de contrôle PDCCH peuvent prendre différents formats selon les éléments qu'elles transportent. Les informations de contrôle DCI selon un format 0_1 (dédié à l'UL) ou 1_1 (dédié au DL) contiennent outre la localisation des ressources en temps et en fréquence allouées en UL et/ou en DL à l'UE 3, un indicateur de BWP à activer par celui-ci, cet indicateur désignant de façon univoque une BWP à activer par l'UE 3 et la numérologie associée à utiliser. Les formats 0_1 et 1_1 des informations de contrôle DCI et les éléments qu'ils contiennent, ainsi que les autres formats d'informations de contrôle DCI proposés par le standard 3GPP, sont décrits notamment dans le paragraphe 7.3 du document 3GPP TS 38.212 intitulé « Technical Spécification Group Radio Access Network ; NR ; Multiplexing and channel coding (Release 17) », v17.5.0, mars 2023. Ainsi, le canal PDCCH est un canal de contrôle susceptible de véhiculer un indicateur de BWP au sens de l'invention.

De façon connue en soi, l'UE 3 est configuré pour surveiller périodiquement avec une période T_{PDCCH} le canal PDCCH afin de détecter s'il contient des informations lui étant destinées telles que des informations DCI, et plus particulièrement un indicateur de BWP désignant la BWP vers laquelle il doit basculer. La période T_{PDCCH} est donc un paramètre représentatif de la fréquence à laquelle l'UE 3 surveille le canal PDCCH.

Par ailleurs, il découle de cette configuration que si la gNB 2 dispose d'informations à transmettre à l'UE 3 et en particulier d'informations DCI et d'indicateurs de BWP, elle les envoie dans le canal PDCCH de façon cohérente avec cette période T_{PDCCH} pour que l'UE 3 puisse les détecter et les décoder. En d'autres mots, l'envoi d'un indicateur de BWP à l'UE 3 par la gNB 2 n'est pas nécessairement périodique (certaines informations DCI ne contiennent pas d'indicateur de BWP en fonction du format de ces informations DCI), mais lorsque des informations DCI sont envoyées à l'UE 3 par la gNB 2, cet envoi est réalisé dans la BWP active courante de l'UE 3 à un instant coïncidant avec la période T_{PDCCH} avec laquelle l'UE 3 surveille de façon périodique le canal PDCCH.

La période T_{PDCCH} est configurée au niveau de l'UE 3 par la gNB 2 lors de la reconfiguration RRC au moment de l'établissement d'une connexion entre l'UE 3 et la gNB 2. Par exemple, on suppose ici que la période T_{PDCCH} est initialement fixée par l'opérateur du réseau égale à plusieurs slots (ou TTI) correspondant à la numérologie µ=0 (ex. 5 slots correspondant à T_{PDCCH}=5ms). Dans le mode de réalisation décrit ici, conformément à l'invention, cette période T_{PDCCH} est paramétrable et susceptible d'évoluer dans le temps, comme détaillé davantage ultérieurement.

Il convient de noter que l'invention peut s'appliquer dans d'autres contextes ou à d'autres architectures que celle décrite ici, comme par exemple dans un contexte Open-RAN (comme évoqué plus en détail ultérieurement) ou dans un réseau de future génération, ou encore dans un réseau propriétaire, dès lors que celui-ci implémente une fonctionnalité BWP permettant à un équipement utilisateur du réseau de n'utiliser qu'une partie seulement de la bande passante allouée à la cellule à laquelle il est rattaché pour transmettre (i.e. émettre et/ou recevoir) des données.

De façon connue en soi, le réseau de télécommunications NW permet d'offrir une pluralité de services à ses abonnés, chaque service étant associé à des contraintes spécifiques, notamment en termes de latence, de fiabilité de transmission, etc., définies par un SLA (pour « Service Level Agreement » en anglais). A titre illustratif, on considère ici pour le réseau NW, les services suivants :
- un service S1 de type eMBB (ex. réalité virtuelle, réalité augmentée, diffusion vidéo HD, etc.), exigeant des débits de transmission de données élevés ;
- un service S2 de type uRLLC (ex. service de conduite autonome ou de gestion à distance) exigeant une faible latence (inférieure à une milliseconde) et une fiabilité élevée de transmission des données ; et
- un service S3 de type mMTC (ex. IoT) ayant une exigence élevée en terme de densité de déploiement.

Le service S2 est typiquement identifié comme prioritaire en raison de ses exigences en termes de latence (inférieure à un seuil donné, à savoir 1ms pour les services uRLLC).

Dans le mode de réalisation décrit ici, le réseau NW met en oeuvre un découpage en tranches ou « network slicing ». Chaque tranche SL ou « slice » est un sous-réseau logique s'appuyant sur l'infrastructure physique du réseau NW et auquel sont allouées des ressources spécifiques (ex. ressources matérielles, logicielle, etc.). Les différentes slices SL du réseau sont donc avantageusement isolées les unes des autres et disposent de ressources qui leur sont propres.

Chaque slice offre ici un service distinct et est identifiée par un identifiant de slice unique, tel que par exemple un identifiant S-NSSAI (pour « Single - Network Slice Sélection Assistance Information » en anglais) défini dans le standard 3GPP. Ainsi, dans l'exemple de la figure 2, la slice SL(S1) est configurée pour offrir le service S1 et identifiée par l'identifiant S-NSSAI1, la slice SL(S2) est configurée pour offrir le service S2 et identifiée par l'identifiant S-NSSAI2, et la slice SL(S3) est configurée pour offrir le service S3 et identifiée par l'identifiant S-NSSAI3. Il en résulte que selon cette configuration, non seulement le S-NSSAIn associée à une slice SL(Sn), n désignant un entier égal à 1, 2 ou 3 dans l'exemple envisagé, identifie de façon unique cette slice mais également le service Sn qu'elle offre.

On suppose ici, à titre illustratif, que l'UE 3 est connecté simultanément à plusieurs slices du réseau NW, et plus particulièrement aux slices SL(S1) et SL(S2) via lesquelles il peut accéder aux services S1 et S2.

Bien entendu, ces hypothèses ne sont pas limitatives en soi et cet exemple n'est donné qu'à titre illustratif. Ainsi, d'autres services peuvent être offerts par le réseau NW en complément ou en variante des services précités, comme par exemple un service de type V2x (qui peut, selon le scénario envisagé, requérir une latence inférieure à quelques millisecondes et une fiabilité proche de 100% (scénarios dits « Safety-related V2x » incluant la conduite autonome par exemple), ou en variante, un débit élevé, une latence plus élevée et une fiabilité faible (scénarios dits « Non-Safety-related V2x » incluent par exemple les divertissements mobiles à hauts débits), un service de type HMTC (requérant une faible latence, une haute disponibilité et des débits élevés), etc. Le réseau NW peut en outre offrir plusieurs services distincts de chaque catégorie.

Par ailleurs, l'UE 3 peut être connecté à un nombre différent de slices et/ou à des services différents. En effet, comme mentionné précédemment, conformément au standard 3GPP, un UE peut être connecté à une ou plusieurs slices (jusqu'à 8 simultanément).

Enfin, on peut également envisager que le réseau NW offre une pluralité de services présentant des contraintes différentes sans mettre en oeuvre de network slicing. Chaque service offert par le réseau NW est alors identifié de manière unique, par exemple à l'aide d'un identifiant de service.

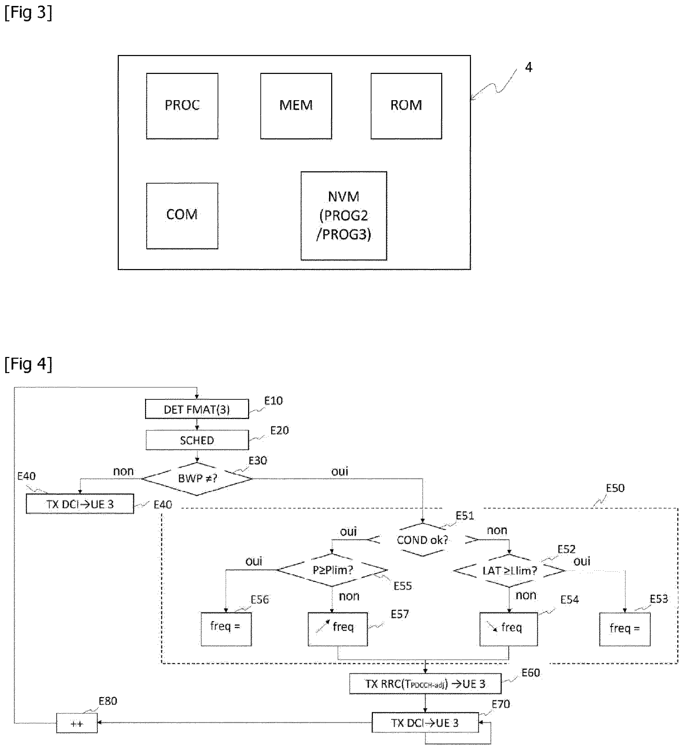

Dans le mode de réalisation décrit ici, la gNB 2 et l'UE 3 ont l'architecture matérielle d'un ordinateur 4 telle qu'illustrée à la figure 3. Cette architecture matérielle comprend notamment un processeur PROC, une mémoire vive MEM, une mémoire morte ROM, une mémoire non volatile NVM, et des moyens COM de communication permettant à la gNB 2 et à l'UE 3 notamment de communiquer entre eux. La mémoire non volatile NVM constitue un support d'enregistrement conforme à l'invention, lisible par le processeur PROC et sur lequel est enregistré un programme conforme à l'invention.

Ce programme, noté PROG2 lorsque l'architecture matérielle de l'ordinateur 4 est celle de la gNB 2, est enregistré dans la mémoire non volatile NVM et comporte des instructions définissant les principales étapes d'un procédé de contrôle selon l'invention tel qu'il est mis en oeuvre par la gNB 2 (entité du réseau au sens de l'invention). Il définit plus spécifiquement les modules fonctionnels de la gNB 2, qui s'appuient et/ou commandent tout ou partie des éléments PROC, MEM, ROM, NVM, et COM de l'ordinateur 4 cités précédemment.

Dans le mode de réalisation décrit ici, le programme PROG2 définit notamment les modules fonctionnels suivants de la gNB 2 (représentés sur la figure 2), qui sont activés pour chaque UE de la cellule CELL pour laquelle la gNB 2 est sollicitée pour transmettre en UL ou en DL des données associées à cet UE (l'UE 3 dans l'exemple envisagé ici) :
- un module 2A de détermination, configuré pour déterminer sur une période de temps donnée, au moins une caractéristique du ou des flux de données à transmettre associé(s) à cet UE, et plus particulièrement ici, pour chaque flux de données, le service et/ou la priorité associé(e) à ce service, la priorité et/ou la latence maximale supportée par ce flux, ainsi que la volumétrie correspondante (c'est-à-dire le nombre de paquets à transmettre véhiculé par ce flux) ;
- un module 2B d'ordonnancement ou ordonnanceur, configuré pour, à partir des caractéristiques des flux déterminées par le module 2A, décider des ressources en temps et en fréquence allouées à la transmission de ces flux (PRB alloués à l'UE et instants de transmission de ces PRB) et leur ordonnancement compte tenu notamment des exigences des services relatifs à ces flux indiquées dans les SLA. C'est le module 2B d'ordonnancement qui décide notamment de la BWP et de la numérologie associée à utiliser par l'UE pour la transmission de ces flux ;
- un module 2C d'ajustement, configuré pour ajuster, en fonction de tout ou partie des caractéristiques des flux obtenues, la fréquence à laquelle l'UE surveille le canal de contrôle PDCCH, appelée ici fréquence de surveillance du canal de contrôle PDCCH ;
- un module 2D de notification, configuré pour notifier la fréquence de surveillance ajustée par le module 2C d'ajustement à l'UE ; et
- un module 2E d'envoi, configuré pour envoyer à l'UE, en tenant compte de la fréquence de surveillance ajustée, des informations qui lui sont destinées dans le canal de contrôle PDCCH, et en particulier des informations de contrôle DCI contenant les indicateurs de BWP que l'UE doit le cas échéant successivement activer pour la transmission des flux qui lui sont associés.

Le fonctionnement des modules 2A à 2E de la gNB 2 est détaillé davantage ultérieurement en référence aux étapes du procédé de contrôle selon l'invention. Il convient de noter que le module 2A de détermination et le module 2B d'ordonnancement sont optionnels, la gNB 2 pouvant obtenir en variante les caractéristiques des flux associés à un UE (par exemple une prédiction de telles caractéristiques) d'une fonction réseau du réseau NW dite d'analyse de données, aussi connue sous le nom de fonction réseau NWDAF (pour « NetWork Data Analysis Function » en anglais) dans le contexte d'un réseau 5G.

De façon similaire, le programme d'ordinateur enregistré dans la mémoire non volatile NVM, lorsque l'architecture matérielle de l'ordinateur 4 est celle de l'UE 3, est noté PROG3 et comporte des instructions définissant les principales étapes d'un procédé de communication selon l'invention tel qu'il est mis en oeuvre par l'UE3. Il définit plus spécifiquement les modules fonctionnels de l'UE 3, qui s'appuient et/ou commandent tout ou partie des éléments PROC, MEM, ROM, NVM, et COM de l'ordinateur 4 cités précédemment.

Le programme PROG3 définit notamment les modules fonctionnels de l'UE 3 suivants (représentés sur la figure 2) :
- un module 3A de réception, configuré pour recevoir une notification de la fréquence de surveillance ajustée par le module d'ajustement de la gNB 2 ; et
- un module 3B de surveillance, configuré pour surveiller le canal de contrôle PDCCH diffusé par la gNB 2 sur la cellule CELL, conformément à la fréquence de surveillance ajustée notifiée au module 3A.

Dans le mode de réalisation décrit ici, le programme PROG 3 définit également un module 3C d'activation de l'UE 3, connu en soi, et configuré pour appliquer les informations DCI envoyées par la gNB 2 dans le canal de contrôle PDCCH. En particulier, le module 3C est configuré pour activer chaque BWP indiquée le cas échéant dans les informations DCI véhiculées par le canal PDCCH, de façon connue en soi et non décrite en détail ici. Par exemple, le module 3C d'activation procède ici de façon similaire ou identique à ce qui est défini dans le document 3GPP TS 38.101-2 intitulé « Technical Spécification Group Radio Access Network ; NR ; User Equipment (UE) radio transmission and réception ; Part 2 : Range 2 Standalone (Release 18) », v18.1.0 (03-2023), et détaillé également en sections II à IV du document de X. Lin et al. intitulé « A Primer on Bandwidth Parts in 5G New Radio », avril 2020.

Le fonctionnement des modules 3A à 3C de l'UE 3 est détaillé davantage ultérieurement en référence aux étapes du procédé de communication selon l'invention.

Comme mentionné précédemment, on considère ici à titre illustratif que l'UE 3 est connecté simultanément aux deux slices SL(S1) et SL(S2) et peut donc accéder simultanément aux services S1 et S2 offerts par ces slices. **La** **figure 4** illustre les principales étapes d'un procédé de contrôle selon l'invention telles que mises en oeuvre par la gNB 2 pour gérer de manière efficace l'accès par l'UE 3 à ces services S1 et S2 en utilisant la fonctionnalité BWP.

Par souci de simplification, on se limite ici à un accès UL aux services S1 et S2 par l'UE 3, autrement dit aux flux de données sortants envoyés dans le cadre de son accès à chacun de ces services par l'UE 3, via le réseau NW, à destination d'une entité distante (aussi désigné par flux de données sortants ou trafic sortant associé(s) à l'UE 3), quelle que soit la localisation de cette entité distante (dans le réseau NW ou à l'extérieur du réseau NW). L'invention peut toutefois s'appliquer de manière similaire ou identique aux flux de données entrants c'est-à-dire en DL.

Dans ce contexte, la gNB 2 détermine dans un premier temps, via son module 2A de détermination, des caractéristiques du trafic sortant associé à l'UE 3 (c'est-à-dire des flux de données destinés à être émis en UL par l'UE), relatif à chaque service auquel l'UE 3 est connecté et autorisé à être connecté (services S1 et S2 pour l'UE 3 dans l'exemple envisagé ici) (étape E10). Les caractéristiques du trafic sortant sont déterminées ici sur une période de temps déterminée, par exemple la durée d'une trame (10ms). Bien entendu, cet exemple n'est donné qu'à titre illustratif, et une période de temps plus ou moins longue peut être envisagée.

Plus particulièrement ici, le module 2A de détermination estime, pour chaque service (ou de façon équivalente ici, chaque slice) auquel l'UE 3 est connecté ou autorisé à se connecter, s'il est prioritaire ou non (ou de façon équivalente, sa priorité) et la volumétrie (c'est-à-dire le nombre de paquets de données) à transmettre pour l'UE 3 pour chaque flux QoS identifié pour ce service, chaque flux QoS pouvant regrouper plusieurs flux de données de service relatifs à l'UE 3 ayant les mêmes exigences de QoS. Un ou plusieurs flux QoS (et incidemment plusieurs flux de données de service) peuvent être émis par l'UE 3 en UL pour un même service (autrement dit pour une même slice ici).

Chaque flux QoS est associé, conformément au standard 3GPP, à une valeur 5QI. Les valeurs 5QI sont des nombres scalaires définis de façon standardisée ou non pour différentes catégories de flux (flux GBR (pour « Guaranteed Bit Rate » en anglais), non-BGR (pour « Non-Guaranteed Bit Rate » en anglais) et Delay Critical GBR). Chaque valeur 5QI pointe vers un profil QoS unique, comprenant un ensemble de valeurs attribuées à divers paramètres de QoS à appliquer à tous les flux de données de service liés au flux QoS auquel est affecté cette valeur 5QI. Ces paramètres de QoS incluent par exemple un niveau de priorité, un retard maximum toléré pour un paquet de données (ou PDB pour « Packet Delay Budget » en anglais) (latence ou gigue), un taux d'erreur par paquet de données (ou PER pour « Packet Error Rate » en anglais), un débit garanti, un débit maximal, etc. De plus amples détails sur les valeurs 5QI sont disponibles dans le document 3GPP TS 23.501 intitulé « Technical Spécification Group Services and System Aspects ; System Architecture for the 5G System (5GS); Stage 2 (Release 17) », v17.8.0 (2023-03).

Une valeur 5QI est donc utilisée pour caractériser les paramètres de QoS que doit respecter un flux QoS associé à un service, et incidemment les flux de données de service liés à ce flux QoS. Par exemple, une valeur 5QI égale à 1, associée à un niveau de priorité égal à 20, un PDB de 100ms et un PER de 10⁻², peut être utilisée pour caractériser un flux GBR d'un service de conversation de type voix. Une valeur 5QI égale à 2, associée à un niveau de priorité égal à 40, un PDB de 150ms et un PER de 10⁻³, peut être utilisée pour caractériser un flux GBR d'un service de conversation de type vidéo (diffusion en direct ou « live streaming » en anglais) ; etc.

Une telle valeur 5QI est conventionnellement fournie par la gNB 2 à un UE (par exemple ici à l'UE 3) lors de son attachement à la gNB 2, pour chaque flux de données de service susceptible d'être envoyé par l'UE et lié à un flux QoS.

Bien entendu, d'autres indicateurs peuvent être envisagés pour caractériser les exigences en termes de latence d'un flux de données de service associé à un UE (ou d'un flux QoS auquel est lié un tel flux de données de service), comme par exemple un indicateur de classe QoS (ou QCI), un indicateur de priorité reflétant l'exigence en termes de latence du flux, etc.

Dans le mode de réalisation décrit ici, le module 2A de détermination obtient à l'issue de l'étape E10, une matrice de flux QoS sortants associés à l'UE 3, notée FMAT(3). Les colonnes de cette matrice représentent les services (ou slices ici) auxquels l'UE 3 est connecté, tandis que ses lignes correspondent aux différents flux QoS relatifs à chaque service, chaque flux QoS étant associé à une valeur 5QI.

La matrice de flux QoS FMAT(3) obtenue par le module 2A de détermination contient, pour chaque service (ou slice) auquel l'UE 3 est connecté, et pour chaque flux QoS relatif à ce service associé une valeur 5QI, la volumétrie des flux de données de service à transmettre (c'est-à-dire le nombre de paquets de données à transmettre véhiculés dans ces flux) liés à ce flux QoS.

La matrice de flux QoS FMAT(3) a par exemple à l'issue de l'étape E10, la forme représentée à la Table 2 :

**Table 2]**

| FMAT(3) | Slice SL(S1) | Slice SL(S2) |
|---|---|---|
| Flux QoS DF1, Valeur 5QI1 | nb1 | 0 |
| Flux QoS DF2 | nb2 | 0 |
| Valeur 5QI2 | | |
| Flux QoS DF3, Valeur 5QI3 | 0 | nb3 |

où :
- 5QI1 et 5QI2 désignent les valeurs 5QI associées respectivement aux flux QoS DF1 et DF2 relatifs au service non prioritaire S1 (c'est-à-dire les flux QoS susceptibles d'être échangés dans le cadre de ce service). Les valeurs 5QI1 et 5QI2 fournissent notamment les latences (délais PDB) maximales supportées par les flux QoS DF1 et DF2 (et incidemment par les flux de données liés à ces flux QoS). Les flux QoS DF1 et DF2 comprennent respectivement nb1 et nb2 paquets de données (pouvant être véhiculés par un ou plusieurs flux de données de service) ; et
- 5QI3 désigne la valeur 5QI associée au flux QoS DF3 relatif au service prioritaire S2 (c'est-à-dire susceptible d'être échangé dans le cadre de ce service). Cette valeur 5QI3 fournit notamment la latence (délai PDB) maximale supportée par le flux QoS DF3 (et incidemment par les flux de service liés à ce flux QoS DF3). Le flux QoS DF3 comprend nb3 paquets de données (pouvant être véhiculés par un ou plusieurs flux de données de service).

Bien entendu, d'autres formes de matrices ou d'autres structures de données peuvent être envisagées pour collecter les caractéristiques des flux déterminées par le module 2A de détermination.

La matrice des flux FMAT(3) peut être déterminée par le module 2A à partir d'informations recueillies auprès d'une ou de plusieurs sources.

Par exemple, pour les flux sortants, l'UE 3 peut fournir au module 2A de la gNB 2, la volumétrie (nombre de paquets) qu'il envisage d'envoyer pour chaque flux QoS associé à chaque service auquel il est connecté (et pour chaque flux de données de service liés à un tel flux QoS), ainsi que la valeur 5QI associée à chacun de ces flux QoS.

Le module 2A peut en outre exploiter des informations dont la gNB 2 dispose pour construire la matrice FMAT(3) et obtenir tout ou partie des caractéristiques du trafic sortant associé à l'UE 3. En effet, la gNB 2 connaît, pour chaque slice du réseau NW, l'identifiant (S-NSSAI) de cette slice, le ou les services qu'elle propose, ainsi que les UE connectés à la slice. La gNB 2 est également en mesure de déterminer en interrogeant la fonction d'accès et de mobilité du réseau NW (aussi connue sous le nom de fonction réseau AMF pour « Access and Mobility Function » en anglais), les slices autorisées pour un UE particulier suite à son enregistrement auprès du réseau NW. La gNB 2 dispose par ailleurs des SLA associés à chaque service fourni par le réseau NW. , qui lui permet d'identifier les flux QoS relatifs à ce service ainsi que les valeurs 5QI associées à ces flux QoS (et incidemment, la priorité associée à chaque flux QoS et la latence maximale supportée par celui-ci et par chaque flux de données de service lié à ce flux QoS).

Le module 2A peut donc exploiter ces informations, combinées à celles fournies le cas échéant par l'UE 3, pour compléter la matrice FMAT(3).

Il peut également, en variante, exploiter ces informations sur les services auxquels est connecté l'UE 3 et les priorités associés à ces services, et estimer les flux sortants et la volumétrie de ces flux en utilisant un modèle de prédiction MOD(3) du trafic associé à l'UE 3, établi pour chaque service offert par le réseau NW auquel l'UE 3 est autorisé à se connecter (ou de façon équivalente ici pour chaque slice du réseau NW autorisée pour l'UE 3). Aucune limitation n'est attachée à la nature du modèle de prédiction qui peut s'appuyer sur un algorithme d'apprentissage par renforcement ou par renforcement profond, un modèle mathématique ou une heuristique, etc.

Dans l'exemple illustratif considéré ici, où les deux slices SL(S1) et SL(2) sont autorisées pour l'UE 3, et seul le trafic sortant associé à l'UE 3 est pris en compte, un tel modèle MOD(3) comprend deux composantes, une première composante MOD(3,S1) correspondant à un modèle de prédiction de trafic UL établi pour l'UE 3 pour le service S1 (ou de façon équivalente pour la slice SL(S1)) et une deuxième composante MOD(3,S2) correspondant à un modèle de prédiction de trafic UL établi pour l'UE 3 pour le service S2 (ou de façon équivalente pour la slice SL(S2)), soit MOD(3)=[MOD(3,S1) ; MOD(3,S2)]. Un tel modèle de prédiction MOD(3) peut être appris (c'est-à-dire construit et mis à jour jusqu'à converger vers un modèle stable) de façon connue en soi, à partir de données d'apprentissage collectées lors d'une phase préliminaire d'apprentissage, ces données d'apprentissage correspondant aux caractéristiques précitées (nombre de flux, niveau de priorité associé, volumétrie) déterminées pour les flux sortants associés à l'UE 3 durant la phase d'apprentissage, à chaque fois que l'UE 3 est connecté à un service offert par une slice du réseau NW. Un tel apprentissage peut être supervisé ou non.

Le module 2A de détermination peut en variante utiliser, pour chaque service auquel l'UE 3 est connecté ou autorisé à se connecter, un modèle de prédiction du trafic sortant associé à une pluralité d'UE attachés à la gNB 2 et connectés ou autorisés à se connecter à ce service (la pluralité d'UE est par exemple un groupe d'UE connectés ou autorisés à se connecter aux mêmes slices, ou l'ensemble des UE attachés à la gNB 2).

Par ailleurs, comme mentionné précédemment, dans l'exemple illustratif envisagé ici, on ne considère par souci de simplification pour l'UE 3 que des flux de données sortants, c'est-à-dire émis par l'UE 3. Dans l'hypothèse de l'existence de flux de données entrants destinés à l'UE 3, le module 2A peut obtenir les caractéristiques de ces flux entrants, et compléter la matrice FMAT(3) établie pour les flux entrants, à partir d'informations fournies par l'entité distante à l'origine des flux entrants et/ou à partir d'informations dont la gNB 2 dispose, ou en utilisant un modèle de prédiction pour le trafic DL, de façon similaire ou identique à ce qui vient d'être décrit pour les flux sortants.

En variante, des informations permettant de déterminer la matrice FMAT(3) des flux sortants associés à l'UE 3 peuvent être obtenues par le module 2A d'autres entités du réseau NW ayant une visibilité sur ces flux, comme par exemple une fonction réseau NWDAF telle qu'évoquée précédemment.

A partir des caractéristiques des flux QoS sortants contenues dans la matrice FMAT(3), le module 2B d'ordonnancement (ou ordonnanceur ou encore « scheduler » en anglais) de la gNB 2 décide de l'ordonnancement des paquets de données véhiculés par ces flux (étape E20). Différents types d'ordonnanceurs peuvent être envisagés dans le contexte de l'invention, comme par exemple un ordonnanceur configuré pour ordonnancer les paquets de flux de données appartenant à différentes slices tel que décrit dans le document de M. Raftopoulou et al. intitulé « Optimisation of Numerology and Packet Scheduling in 5G Networks : To Slice or not to Slice », IEEE 93rd Vehicular Technology Conference, 2021, ou dans le document de X. Zhang et al. intitulé « RB Allocation Scheme for eMBB and uRLLC coexistence in 5G and Beyond », Wireless Communications and Mobile Computing, vol. 2021, 11 octobre 2021. Ces exemples ne sont donnés qu'à titre illustratif et ne sont pas limitatifs en soi, d'autres ordonnanceurs pouvant être utilisés dans le contexte de l'invention, comme par exemple un ordonnanceur basé sur un algorithme similaire à celui décrit dans le document de Boutiba et al. cité précédemment, mais dans lequel la contrainte visant à utiliser une même BWP et une même numérologie pour les services S1 et S2 est relâchée.

Ainsi, le module 2B d'ordonnancement affecte une BWP associée à une numérologie µ (notée BWP(µ)) à chaque flux QoS se rapportant aux services auxquels l'UE 3 est connecté(S1 et S2 dans l'exemple envisagé ici), à partir de la connaissance de ces services et des flux QoS, de leurs priorités respectives ou de leurs exigences respectives en termes de latence. Le choix effectué par le module 2B d'ordonnancement de la partie de bande passante BWP(µ) à activer pour la transmission des flux QoS relatifs à un service tient compte du SLA associé au service et des profils QoS associés aux flux QoS : la BWP et la numérologie µ choisies permettent en effet de respecter le SLA du service et le profil QoS des flux QoS.

Dans le mode de réalisation décrit ici, le module 2B d'ordonnancement est configuré pour choisir une même BWP pour tous les flux QoS se rapportant à un même service. Par exemple, une partie de bande passante BWP2 (extraite de la bande passante BW(CF) allouée à la cellule CELL) associée à une numérologie µ2 élevée (ex. µ2=3 ou 4 dans la table 1), notée dans la suite BWP2(µ2), est choisie pour les flux QoS relatifs au service S2 prioritaire (flux DF3), tandis qu'une partie de bande BWP1 (extraite de la bande BW(CF) allouée à la cellule CELL) associée à une numérologie µ1 moins élevée (ex. µ1=0 ou 1 dans la table 1), notée dans la suite BWP1(µ1), est choisie pour les flux DF1 et DF2 relatifs au service S1 non prioritaire.

Toutefois, comme mentionné précédemment, on peut envisager de choisir des BWP différentes pour transmettre les flux QoS se rapportant à un même service si cela est pertinent au regard des profils QoS associés à ces flux QoS.

Il convient de noter que lors du choix de la BWP et de la numérologie adaptée à chaque service auquel est connecté l'UE 3 (respectivement à chaque flux QoS se rapportant à un service auquel l'UE 3 est connecté), le module 2B d'ordonnancement peut être configuré pour examiner en premier lieu si la BWP active courante au niveau de l'UE 3, et la numérologie associée à cette BWP active courante, peuvent être utilisées pour transmettre les flux QoS associés à ce service (respectivement ce flux QoS), autrement dit examiner si elles respectent le SLA du service (respectivement le profil QoS associé au flux QoS). Le cas échéant, cette BWP et la numérologie µ associée peuvent être privilégiées pour le service (respectivement pour le flux QoS) en question afin d'éviter un changement de partie de bande.

Par ailleurs, le module 2B d'ordonnancement affecte pour chaque flux QoS de la matrice de flux FMAT(3) correspondant à un trafic non nul :
- un ensemble de PRB pour la transmission des paquets de données des flux de données de service liés à ce flux QoS sur la BWP affectée au service auquel se rapporte ce flux QoS ; et
- des instants de transmission (TTI) de ces PRB.

A titre illustratif, on suppose que l'ordonnancement effectué par le module 2B résulte en l'allocation des ressources suivantes : les nb1 paquets de données du flux QoS DF1 sont répartis sur les TTI T0(1), T1(1),..., TX(1) sur BWP1(µ1), puis les nb2 paquets de données du flux QoS DF2 sont répartis sur les TTI T0(2), T1(2),..., TX(2) sur BWP1(µ1), puis les nb3 paquets de données du flux DF3 sont répartis sur les TTI T0(3), T1(3),..., TX(3) sur BWP2(µ2). Les ressources ainsi allouées par le module 2B sont reportées ici dans la matrice des flux sortants FMAT(3). Cette matrice de flux sortants FMAT(3) représente donc l'activité UL à venir de l'UE 3 sur la période de temps considérée (une trame ici). Il convient de noter qu'en cas d'absence de trafic UL sur cette période de temps pour l'UE 3, la matrice de flux sortants FMAT(3) peut être nulle.

On suppose par ailleurs qu'avant d'envoyer le flux DF1, la BWP active courante utilisée pour les transmissions en UL de l'UE 3 est la BWP UL définie par défaut notée BWP0(µ0=0).

Le module 2C d'ajustement de la gNB 2 examine ensuite si un ou des changements de BWP sont requis au regard de l'ordonnancement réalisé par le module 2B d'ordonnancement pour transmettre le trafic sortant de l'UE 3 (étape test E30).

Dans le mode de réalisation décrit ici, si le module 2C détermine qu'aucun changement de BWP n'est requis (réponse non à l'étape test E30), alors la gNB 2, via son module 2E d'envoi, informe l'UE 3 des ressources qui lui sont allouées pour l'émission de son trafic sortant (étape E40). A cet effet, le module 2E d'envoi envoie des informations de contrôle DCI destinées à l'UE 3 (par exemple selon le format 0_1 ou 0_0 décrit dans le document 3GPP TS 38.212 cité précédemment) et identifiant ces ressources dans le canal PDCCH. Cet envoi est calé sur la période T_{PDCCH} courante avec laquelle l'UE 3 surveille de façon périodique le canal PDCCH pour que l'UE 3 soit en mesure de détecter et de décoder ces informations DCI.

Dans l'exemple illustratif envisagé ici, il résulte de l'étape test E30 :
- qu'un changement de BWP est requis, de la BWP0(µ0) courante vers BWP1(µ1), pour transmettre les paquets de données du flux DF1 ;
- qu'aucun changement de BWP n'est requis depuis la BWP1(µ1) pour transmettre les paquets de données du flux DF2 ; et
- qu'un changement de BWP est de nouveau requis, de la BWP1(µ1) vers BWP2(µ2), pour transmettre les paquets de données du flux DF3.

Autrement dit, lors de l'étape test E30, le module 2C d'ajustement détecte que deux changements de BWP sont requis (réponse oui à l'étape test E30).

Conformément au standard 3GPP, chaque changement de BWP est notifié par la gNB 2 au niveau de l'UE 3 en envoyant des informations de contrôle DCI selon le format 0_1 (pour les transmissions UL) à l'UE 3 sur le canal de contrôle PDCCH. Ces informations de contrôle DCI comprennent l'indicateur de BWP désignant la nouvelle partie de bande à activer par l'UE 3 et la numérologie associée pour la transmission des données, en remplacement de la partie de bande active et de la numérologie courantes.

Conformément à l'invention, avant d'envoyer les indicateurs de BWP, le module 2C d'ajustement examine si un ajustement de la fréquence de surveillance du canal PDCCH par l'UE 3 est pertinent et le cas échéant, évalue l'ampleur (i.e. dimensionne) de cet ajustement (étape E50). On note qu'un tel examen peut être mené y compris lorsqu'aucun changement de BWP n'est requis auprès de l'UE 3 et donc qu'aucun indicateur de BWP n'est envoyé par la gNB 2 pour la trame sur laquelle le trafic sortant associé à l'UE 3 a été considéré.

Dans le mode de réalisation décrit ici, lors de l'étape E50, le module 2C d'ajustement examine plusieurs conditions liées d'une part, aux caractéristiques des flux sortants associés à l'UE 3 à transmettre, mais également ici à un ou plusieurs indicateurs de performance de l'UE 3 et/ou du réseau NW.

Plus précisément, le module 2C d'ajustement détermine d'abord si au moins deux parties de bande distinctes sont affectées à l'UE 3 pour la transmission des flux QoS sortants identifiés (et correspondant à un trafic non nul) dans la matrice des flux sortants FMAT(3) (et donc pour les flux de données de service liés à ces flux QoS) et si au moins un service auquel l'UE 3 est connecté et/ou au moins un flux QoS sortant de la matrice FMAT(3) (et donc incidemment au moins un flux de données de service liés à ce flux QoS) est identifié comme prioritaire ou associé à une latence maximale inférieure à un seuil donné (étape E51). Ce seuil est choisi de sorte à refléter une exigence forte en matière de latence ; il est pris par exemple ici égal à 1ms.

Si cette condition n'est pas vérifiée (réponse non à l'étape E51), par exemple tous les services auxquels l'UE 3 est connecté sont identifiés comme non prioritaires ou tolèrent une latence maximale supérieure à un seuil donné (latence considérée comme peu élevée) ou tous les flux QoS identifiés dans la matrice de flux sortants FMAT(3) (et donc incidemment tous les flux de données de service liés à ces flux QoS) sont identifiés comme non prioritaires par la gNB 2 (ou comme non exigeants en termes de latence), ou encore une même BWP est affectée à tous les services auxquels l'UE 3 est connecté et à tous les flux sortants de la matrice de flux FMAT(3) (et donc incidemment à tous les flux de données de service liés à ces flux QoS), le module 2C d'ajustement examine si la fréquence de surveillance courante du canal PDCCH par l'UE 3 peut être réduite afin de diminuer la puissance consommée par l'UE 3. Une telle réduction se traduit par une diminution des traitements de surveillance et de décodage du canal PDCCH implémentés par l'UE 3, et donc de la puissance consommée par ce dernier.

A cet effet, le module 2C d'ajustement détermine si la latence de bout-en-bout du réseau pour chaque service auxquels l'UE 3 est connecté (S1 et S2 dans l'exemple envisagé ici) atteint ou dépasse une valeur limite Llim définie pour ce service, qui correspond à la latence maximale tolérée par ce service (étape test E52). Cette valeur limite est extraite par la gNB 2 pour chaque service de son SLA. La latence de bout-en-bout du réseau pour chaque service auxquels l'UE 3 est connecté peut être mesurée par l'UE 3 et fournie par ce dernier à la gNB 2 ou en variante être estimée par la gNB 2.

Si la valeur limite Llim est atteinte ou dépassée pour l'un des services (réponse oui à l'étape test E52), la fréquence de surveillance courante est maintenue en l'état (i.e. pas d'ajustement) (étape E53). En effet, une réduction de la fréquence de surveillance permettrait certes de réduire la puissance consommée par l'UE 3 mais elle aurait pour conséquence d'augmenter la latence de bout-en-bout du réseau pour ce service, ce qui serait préjudiciable à la qualité du service.

La gNB 2, via son module 2E d'envoi, informe alors l'UE 3 des ressources qui lui sont allouées pour l'émission de son trafic sortant, comme décrit précédemment à l'étape E40.

Si la valeur limite Llim n'est pas atteinte pour aucun des services auxquels l'UE 3 est connecté (réponse non à l'étape test E52), le module d'ajustement 2C diminue la fréquence de surveillance courante, par exemple en augmentant d'un nombre de déterminé de slots la période T_{PDCCH} avec laquelle l'UE 3 surveille de façon périodique le canal PDCCH (étape E54). Ceci permet avantageusement d'économiser les ressources du réseau et la consommation de puissance de l'UE 3.

Pour dimensionner de quel ordre la fréquence de surveillance doit être diminuée, c'est-à-dire « dimensionner » la diminution à apporter à la fréquence de surveillance (dans l'exemple envisagé ci-avant, évaluer le nombre de slots à ajouter à la période T_{PDCCH}), le module 2C peut procéder par tâtonnement, de manière itérative, par exemple en ajoutant lors de chaque itération un slot (ou plus) à la période T_{PDCCH} tant que la latence de bout-en-bout du réseau en résultant pour chaque service est inférieure respectivement à la valeur limite Llim définie pour ce service. On note T_{PDCCH-adj}, la période maximale permettant de respecter la contrainte de latence de bout-en-bout. Cette période T_{PDCCH-adj}, ajustée par rapport à la valeur T_{PDCCH}, est représentative de la fréquence de surveillance ajustée.

Il convient de noter que les étapes E52 à E54 sont optionnelles et visent à optimiser les ressources du réseau NW et de l'UE 3. Ainsi, dans une variante de réalisation, si les services relatifs aux flux sortants associés à l'UE 3 n'ont pas de priorités différentes ni d'exigences en termes de qualité de service différentes, la fréquence de surveillance du canal PDCCH par l'UE 3 est maintenue en l'état (pas d'ajustement). Par ailleurs, le module 2C d'ajustement peut également être configuré pour mettre en oeuvre les étapes E52 à E54 qui viennent d'être décrites lorsqu'à l'étape E30, le module 2C détermine qu'aucun changement de BWP n'est requis par l'ordonnancement proposé par le module 2B.

Si la condition examinée à l'étape E51 est vérifiée (réponse oui à l'étape test E51), le module 2C d'ajustement examine si une augmentation de la fréquence de surveillance courante est possible, afin de réduire la latence due au changement de BWP, et améliorer la qualité de service des services et/ou des flux les plus prioritaires ou les plus exigeants en matière de latence. De tels services sont par exemple identifiés comme prioritaires du fait de leurs exigences en matière de latence (ex. services uRLLC ou V2X), ou parce qu'ils sont associés à des flux QoS ayant des valeurs 5QI élevées, supérieures à un seuil donné (par exemple supérieures à 82). Des considérations similaires s'appuient aux flux QoS et aux flux de données de service.

A cet effet, le module 2C d'ajustement détermine si la puissance consommée par l'UE 3 a atteint ou dépassé une valeur limite Plim (étape test E55). La puissance consommée par l'UE 3 est une mesure effectuée par l'UE 3 classiquement remontée à la gNB 2 et disponible au niveau de la gNB 2. La valeur limite Plim représente la valeur de la puissance maximale que l'UE 3 est autorisée à consommer ; elle est connue de la gNB 2 et définie par l'opérateur du réseau NW au regard des limites imposées par la Réglementation.

Si la puissance consommée par l'UE 3 a atteint ou dépassé sa valeur limite Plim (réponse oui à l'étape test E55), la fréquence de surveillance courante est maintenue en l'état (pas d'ajustement) (étape E56). En effet, une augmentation de la fréquence de surveillance aurait pour conséquence une augmentation de la puissance consommée par l'UE 3, ce qui pourrait s'avérer préjudiciable pour l'utilisateur de l'UE 3.

La gNB 2, via son module 2E d'envoi, informe alors l'UE 3 des ressources qui lui sont allouées pour l'émission de son trafic sortant, comme décrit précédemment à l'étape E40.

Sinon (réponse non à l'étape test E55), le module 2C d'ajustement augmente la fréquence de surveillance courante du canal de contrôle PDCCH par l'UE 3, par exemple en réduisant la période T_{PDCCH} d'un nombre déterminé de slots (étape E57). Pour évaluer l'augmentation à apporter à la fréquence de surveillance courante (autrement dit dans l'exemple envisagé ici, le nombre de slots à soustraire à la période T_{PDCCH}), le module 2C peut procéder par tâtonnement, de manière itérative, par exemple en réduisant d'un slot lors chaque itération la période T_{PDCCH} tant que la puissance consommée par l'UE 3 reste inférieure à sa valeur Plim. On note T_{PDCCH-adj}, la période minimale permettant de respecter la contrainte de puissance consommée par l'UE 3. Cette période T_{PDCCH-adj}, ajustée par rapport à la valeur T_{PDCCH}, est représentative de la fréquence de surveillance ajustée.

D'autres façons de déterminer si un ajustement de la fréquence de surveillance courante est pertinent et le cas échéant, d'évaluer cet ajustement, peuvent être mises en oeuvre par le module 2C d'ajustement au cours de l'étape E50, en prenant en compte les caractéristiques des flux associés à l'UE 3 collectées dans la matrice FMAT(3), et le cas échéant, d'autres facteurs comme des indicateurs de performance de l'UE 3 et/ou du réseau NW. Par exemple, le module 2C d'ajustement peut utiliser une intelligence artificelle (AI pour « Artificial Intelligence » en anglais) ou un algorithme d'apprentissage automatique (ou ML pour « Machine Learning » en anglais), ou encore un algorithme heuristique ou basé sur la théorie des jeux auxquels les caractéristiques des flux et le cas échéant les indicateurs de performances sont fournis en tant que paramètres d'entrée.

Par ailleurs, d'autres quantités représentatives de la fréquence de surveillance peuvent être envisagées que la période avec laquelle l'UE 3 surveille le canal PDCCH, telle que par exemple l'inverse de cette période (fréquence).

Si au cours de l'étape E50, un ajustement de la fréquence de surveillance du canal PDCCH par l'UE 3 a été décidé (étapes E54 et E57), alors la fréquence de surveillance ajustée est notifiée à l'UE 3 par la gNB 2 via son module 2D de notification (étape E60). A cet effet, le module 2D de notification utilise par exemple un message RRC permettant de reconfigurer l'UE 3 avec la fréquence de surveillance ajustée, pour qu'il la mette en oeuvre pour surveiller le canal PDCCH (i.e. pour qu'elle devienne la fréquence de surveillance courante appliquée par l'UE 3). Plus particulièrement, ce message RRC est utilisé par la gNB 2 pour modifier la valeur du champ monitoringSlotPeriodicityAndOffset qui définit la périodicité avec laquelle l'UE 3 doit scanner une bande de fréquences déterminée (définie par le CORESET) pour détecter le canal PDCCH qui véhicule les informations (dont les informations de contrôle DCI) qui lui sont destinées. En d'autres mots, le champ monitoringSlotPeriodicityAndOffset définit la valeur de la période T_{PDCCH}. La modification de champ avec la valeur T_{PDCCH-adj} permet d'informer l'UE 3 de la nouvelle fréquence de surveillance à appliquer.

Il convient de noter que réduire (diminuer) la fréquence de surveillance de l'UE 3 a une incidence sur la fréquence à laquelle la gNB 2 peut envoyer des informations à l'UE 3 dans le canal de contrôle PDCCH, et en particulier des informations de contrôle DCI transportant un indicateur de BWP. En effet, la gNB 2 doit tenir compte de cette réduction lorsqu'elle envoie des informations DCI sur le canal de contrôle PDCCH à l'UE 3, pour que l'UE 3 puisse être en mesure de détecter et de décoder ces informations. En fonction de l'ajustement réalisé par le module 2C, l'UE 3 ne sera en mesure de détecter et de décoder ces informations que de façon plus espacée dans le temps par rapport à sa configuration initiale (si une réduction de la fréquence de surveillance a été opérée) ou à l'inverse de façon plus rapprochée dans le temps (si une augmentation de la fréquence de surveillance a été opérée). Ainsi, suite à l'étape E60 de reconfiguration RRC de l'UE 3 avec la fréquence de surveillance ajustée, la gNB 2 est configurée pour envoyer des informations DCI dans le canal PDCCH en fonction de cette fréquence de surveillance ajustée (étape E70).

Il en résulte avantageusement que si un changement de BWP est requis (par exemple pour la transmission des paquets de données des flux DF1 et DF2) et que la fréquence de surveillance a été augmentée, la gNB 2 peut informer plus rapidement l'UE 3 de la nouvelle BWP à activer par l'UE 3, via l'envoi d'informations de contrôle DCI au format 0_1 sur le canal de contrôle PDCCH. Les informations DCI contiennent également les ressources allouées à l'UE 3 par le module 2B d'ordonnancement pour la transmission du trafic sortant de l'UE 3. Tout autre changement de BWP ultérieur (par exemple pour la transmission des paquets de données du flux DF3) est signalé de façon identique à l'UE 3 (dans l'exemple envisagé, avec les ressources allouées à l'UE 3 sur cette nouvelle BWP pour la transmission des paquets de données du flux DF3).

Les étapes E10 à E70 du procédé de contrôle qui viennent d'être décrites sont réitérées par la gNB 2 plusieurs fois (étape E80), périodiquement dans le mode de réalisation décrit ici, par exemple à chaque nouvelle trame (i.e. toutes les 10ms ici) et ce, tant que l'UE 3 est connecté à la gNB 2. Bien entendu, une période différente peut être envisagée. En outre, dans un autre mode de réalisation, les étapes E10 à E60 peuvent être déclenchées sur détection d'un événement particulier, par exemple la connexion de l'UE 3 à une nouvelle slice ou un nouveau service, ou tout autre événement susceptible de modifier les caractéristiques de la matrice des flux FMAT(3) de l'UE 3.

La **figure 5** décrit les étapes du procédé de communication mises en oeuvre par l'UE 3 dans un mode particulier de réalisation, lorsque la fréquence de surveillance du canal de contrôle PDCCH de l'UE 3 a été adaptée par la gNB 2 (étapes E54 et E57 de la figure 4). Il convient de noter que dans le cas où la fréquence de surveillance n'a pas été adaptée, l'UE 3 fonctionne de façon conventionnelle, comme décrit dans l'état de la technique et prévu par le standard 3GPP.

Comme décrit précédemment, la fréquence de surveillance ajustée est notifiée à l'UE 3 par la gNB 2 via son module 2D de notification à l'étape E60 au moyen d'un message RRC contenant ici la période T_{PDCCH-adj}. Ce message RRC est reçu par le module 3A d'obtention de l'UE 3 (étape F10).

Suite à la réception du message RRC, l'UE 3 et plus particulièrement ici son module 3B de surveillance, est reconfiguré avec la valeur de la période T_{PDCCH-adj} représentative de la fréquence de surveillance ajustée pour surveiller le canal PDDCH (étape F20).

Suite à cette reconfiguration, le module 3B de surveillance surveille le canal PDCCH à la fréquence de surveillance ajustée (étape F30). Autrement dit, toutes les T_{PDCCH-adj}, il scanne le canal PDCCH pour détecter si des informations lui étant destinées, et en particulier des informations de contrôle DCI, sont transmises à son attention dans le canal PDCCH par la gNB 2. Le cas échéant, il décode ces informations et les utilise ou les exécute selon la nature des informations.

Par exemple, suite à l'envoi par la gNB 2 à l'étape E70 d'informations de contrôle DCI incluant les ressources allouées à l'UE pour la transmission des flux DF1 et DF2 et l'indicateur de BWP désignant BWP1(µ1), l'UE 3 active via son module 3C d'activation la BWP1(µ1) et bascule vers cette BWP1(µ1) pour transmettre les flux de données DF1 et DF2 conformément aux ressources qui lui ont été allouées et dans le délai maximum autorisé par le standard 3GPP indiqué au paragraphe 8.6 du document 3GPP TS 38.133 intitulé « Technical Spécification Group Radio Access Network ; NR ; Requirements for support of radio resource management (Release 17 », v17.8.0 (2022-12) (étape F40).

**Les** **figures 6** **et** **7** illustrent, sur un exemple simple, les gains apportés par l'invention.

Dans cet exemple, on envisage la transmission pour un UE d'un flux de données F1 relatif à un service offert par la slice SL(1) sur une partie de bande BWP1 et d'un flux de données F2 relatif à un service offert par une slice SL(2) sur une partie de bande BWP2, le service offert par la slice SL(2) étant plus prioritaire (ex. uRLLC) que le service offert par la slice SL(1) (ex. eMBB).

La figure 6 représente, en l'absence de mise en oeuvre de l'invention, le timing des informations DCI envoyées à l'UE pour la transmission des flux F1 sur BWP1 et F2 sur BWP2, et la façon dont ces informations DCI sont exploitées par l'UE 3. Sur la figure 6, la période T_{PDCCH} de surveillance du canal PDCCH par l'UE 3 est fixe, et prise égale à 5 slots ou TTI.

Dans ce contexte, certains paquets des flux F1 et F2 (marqués d'une croix sur la figure 6) ne peuvent pas respecter l'ordonnancement (PRB, TTI et BWP) prévu pour garantir le SLA des services offerts par les slices SL(1) et SL(2), ce qui se traduit par une qualité de service dégradée pour les services offerts par les deux slices. En effet, d1 désigne le temps restant après transmission sur BWP1 de paquets du flux F1 jusqu'au prochain canal de contrôle PDCCH comprenant des informations DCI permettant le basculement de BWP1 vers BWP2 ; par conséquent, des paquets de données relatifs au flux F2 prévus selon l'ordonnancement pour être transmis avant l'expiration de d1 ne peuvent pas être transmis sur BWP2. Il en est de même suite au basculement vers BWP2 pour la transmission de paquets de données relatifs au flux F1 prévus selon l'ordonnancement pour être transmis avant l'expiration de d2, d2 désignant le temps d'attente pour basculer de BWP1 vers BWP2.

La figure 7 représente le timing des informations DCI envoyées à l'UE 3 pour la transmission des flux F1 et F2, et la façon dont ces informations DCI sont exploitées par l'UE 3, lorsque l'invention est mise en oeuvre. Sur cette figure 7, la période T_{PDCCH} initialement fixée à 5 slots, est ajustée à 2 slots (T_{PDCCH-adj(1)}), puis à 3 slots (T_{PDCCH-adj(2)}), puis une nouvelle fois à 2 slots (T_{PDCCH-adj(3)}). Dans ce contexte, tous les paquets des flux F1 et F2 peuvent être transmis conformément à l'ordonnancement et la qualité des services offerts par les slices SL(1) et SL(2) est garantie.

Dans le mode de réalisation décrit ici, on a considéré par souci de simplification uniquement des flux de données sortants c'est-à-dire UL. L'invention s'applique toutefois également aux flux de données entrants envoyés à destination de l'UE (c'est-à-dire en DL), et cela ne poserait aucune difficulté à l'homme du métier d'adapter la description qui vient d'être faite à la transmission de flux de données entrants, en appliquant de façon similaire ou identique ce qui vient d'être décrit pour les flux de données UL aux flux de données DL.

L'invention s'applique également lorsque le trafic associé à l'équipement utilisateur comprend des flux de données entrants (DL) et des flux de données sortants (UL), quelle que soit la technique de multiplexage considérée entre UL et DL (TDD ou FDD). L'invention est en effet appliquée individuellement (indépendamment) sur chaque voie. Il convient toutefois de noter que le canal PDCCH étant susceptible de véhiculer des informations de contrôle DCI qui concernent les transmissions UL comme DL, si l'application de l'invention en UL et l'application de l'invention en DL mènent à un ajustement différent de la fréquence de surveillance, alors c'est la fréquence de surveillance la plus élevée parmi les deux fréquences de surveillance ajustées qui est retenue pour être appliquée par l'équipement utilisateur.

Par ailleurs, le mode de réalisation qui vient d'être décrit, l'entité du réseau 5G NR conforme à l'invention et configurée pour mettre en oeuvre le procédé de contrôle selon l'invention est une station de base de type gNB. L'invention s'applique également à d'autres architectures de réseau, et en particulier à une architecture Open-RAN telle que définie par l'Alliance O-RAN.

De façon connue en soi, Open-RAN ou réseau d'accès radio ouvert, propose une évolution des architectures de réseaux mobiles qui s'appuie sur un réseau d'accès radio (RAN pour « Radio Access Network » en anglais) entièrement programmable constitué de fonctions virtualisées et désagrégées. Typiquement, comme illustré sur la **figure 8****,** pour un RAN 5G NR, la station de base ou gNB est désagrégée en de multiples unités radio (O-RU pour « Open Radio Unit » en anglais), distribuée (O-DU pour « Open Distributed Unit » en anglais) et centralisée (O-CU pour « Open Centralized Unit » en anglais). Les interfaces entre ces unités (ex. A1, E1, E2, etc.) sont ouvertes et interopérables. Chaque unité est responsable d'une fonction et d'une couche protocolaire spécifiques. Par exemple, l'unité O-RU est responsable de la couche physique inférieure (traitements tels que FFT, beamforming, etc.), tandis que l'unité O-DU est responsable du scheduling, de la couche physique supérieure et de la couche 2 incluant le protocole MAC (pour « Medium Access Control » en anglais).

Dans cette architecture, les fonctions RAN sont contrôlées et optimisées au moyen d'un contrôleur logiciel intelligent ou RIC (pour « RAN Intelligent Controller » en anglais). Le RIC est repris sous deux formes logiques, chacune réalisant une fonction différente :
- un Non-RT RIC (pour « Non-Real Time RIC » en anglais), qui s'occupe notamment de la gestion des configurations, des dispositifs, des fautes, des performances et du cycles de vie de tous les éléments du réseau, au moyen d'algorithmes intelligents (ex. AI ou ML) opérant sur une échelle temporelle supérieure à 1s ; et
- un Near-RT-RIC (pour « Near-Real Time RIC » en anglais), qui héberge un grand nombre de micro-services ou xApps, s'appuyant sur des algorithmes opérant sur une échelle temporelle comprise entre 10ms et 1s. Le contrôle de la fréquence de surveillance du canal PDCCH par l'UE conformément à l'invention entre dans cette catégorie d'algorithmes et peut ainsi, dans un autre mode de réalisation, être implémenté par une xApp 5 hébergée par le Near-RT-RIC. La xApp 5 est une entité (logicielle) du réseau conforme à l'invention, comprenant des modules fonctionnels 5A à 5E similaires ou identiques aux modules fonctionnels 2A à 2E de la gNB 2, décrits précédemment. Ils ne sont pas décrits plus en détail ici.

Les étapes E10 à E70 décrites précédemment sont mises en oeuvre par la xApp 5, dans cet autre mode de réalisation, de façon similaire ou identique à ce qui a été décrit précédemment pour la gNB 2, mais impliquent des interfaces de communication propres à l'architecture Open-RAN. Il en est de même pour les étapes F10 à F30 mises en oeuvre par l'UE 3.

Ainsi, dans cet autre mode de réalisation, les informations provenant de l'UE 3 et de l'AMF utilisées par la xApp 5 et éventuellement d'autres entités du réseau NW pour construire la matrice des flux FMAT(3) comme décrit à l'étape E10, sont obtenues par la xApp 5 par l'intermédiaire d'une interface E2. C'est aussi via cette interface que la fréquence de surveillance ajustée le cas échéant est fournie par la xApp 5 à l'UE 3.

Si l'utilisation d'un modèle de prédiction de trafic pour l'UE 3 est envisagée pour l'obtention de la matrice des flux FMAT(3), la phase d'apprentissage et la détermination de la matrice des flux FMAT(3) au moyen de ce modèle de prédiction sont implémentées au niveau du Non-RT RIC qui gère les algorithmes d'AI ou de ML. La matrice des flux FMAT(3) en résultant est alors transmise à la xApp 5 hébergée dans le Near-RT RIC via l'interface E1, qui prend les décisions appropriées, conformément à l'invention, concernant l'ajustement de la fréquence de surveillance f_{PDCCH} du canal PDCCH par l'UE 3.

Dans un autre mode de réalisation encore, l'entité du réseau conforme à l'invention est hébergée au niveau du Non-RT RIC. Les mêmes interfaces que celles qui viennent d'être décrites précédemment sont alors utilisées.

## Revendications

1. Procédé de contrôle, par une entité (2,5) d'un réseau de télécommunications, d'une fréquence dite de surveillance à laquelle un équipement utilisateur (3) surveille un canal de contrôle susceptible de véhiculer au moins un indicateur de partie de bande passante affectée audit équipement utilisateur, ledit procédé de contrôle comprenant :
- une étape d'obtention, sur une période de temps déterminée, d'au moins une caractéristique de flux de données à transmettre, associés audit équipement utilisateur et relatifs à une pluralité de services auxquels est connecté simultanément ledit équipement utilisateur ;
- si au moins un changement de partie de bande passante est requis pour transmettre lesdits flux de données relatifs à ladite pluralité de services, une étape (E54,E57) d'ajustement de ladite fréquence de surveillance, en fonction de ladite au moins une caractéristique ;
- une étape (E60) de notification de ladite fréquence de surveillance ajustée audit équipement utilisateur avant de signaler audit équipement utilisateur ledit au moins un changement de partie de bande passante ; et
- une étape (E70) d'envoi d'informations destinées à l'équipement utilisateur sur ledit canal de contrôle en fonction de ladite fréquence de surveillance ajustée.

2. Procédé de contrôle selon la revendication 1 dans lequel les étapes d'ajustement de la fréquence de surveillance, de notification et d'envoi sont réitérées périodiquement.

3. Procédé de contrôle selon la revendication 1 ou 2 dans lequel lesdites informations destinées à l'équipement utilisateur comprennent au moins un indicateur de partie de bande passante affectée à l'équipement utilisateur à activer pour la transmission dudit au moins un flux de données.

4. Procédé de contrôle selon l'une quelconque des revendications 1 à 3 dans lequel lors de l'étape d'ajustement (E54,E57), ladite fréquence de surveillance est ajustée en outre en fonction d'au moins un indicateur de performance dudit équipement utilisateur et/ou du réseau.

5. Procédé de contrôle selon la revendication 4 dans lequel ledit au moins un indicateur de performance comprend :
- une puissance consommée par ledit équipement utilisateur ; et/ou
- un débit ou une latence de bout-en-bout du réseau.

6. Procédé de contrôle selon l'une quelconque des revendications 1 à 5 dans lequel l'étape d'ajustement comprend une augmentation (E54) de la fréquence de surveillance lorsqu'au moins deux parties de bande distinctes sont affectées audit équipement utilisateur pour une transmission desdits flux de données et lorsqu'au moins un dit service et/ou au moins un dit flux de données est identifié comme prioritaire ou associé à une latence maximale inférieure à un seuil donné.

7. Procédé de contrôle selon l'une quelconque des revendications 1 à 6 dans lequel l'étape d'ajustement comprend une diminution (E57) de la fréquence de surveillance lorsqu'une condition est vérifiée parmi :
- une même partie de bande est affectée audit équipement utilisateur pour une transmission desdits flux de données ;
- ledit au moins un service comprend uniquement un ou des services identifiés comme non prioritaires ou associés à une latence maximale supérieure à un seuil donné ;
- ledit au moins un flux comprend uniquement un ou des flux identifiés comme non prioritaires ou associés à une latence maximale supérieure à un seuil donné.

8. Procédé de contrôle selon l'une quelconque des revendications 1 à 7 dans lequel ladite au moins une caractéristique comprend pour un dit flux de données associé à un dit service :
- une volumétrie dudit flux de données ; et/ou
- des informations relatives à un ordonnancement des paquets de données véhiculés par ledit flux de données et à une partie de bande passante affectée audit service pour une transmission desdits paquets de données ; et/ou
- une priorité associée audit service ; et/ou
- une priorité associée audit flux de données et/ou une latence maximale associée audit flux de données ; et/ou
- une tranche du réseau associé audit service.

9. Procédé de contrôle selon l'une quelconque des revendications 1 à 8 dans lequel lesdits services comprennent au moins un service parmi :
- un service « ultra Reliable Low Latency Communication », uRLLC ;
- un service « enhanced Mobile BroadBand « , eMBB ;
- un service « massive Machine Type Communication », mMTC ;
- un service « Vehicule to Everything », V2X ;
- un service « High performance Mobile Type Communication », HMTC.

10. Procédé de contrôle selon l'une quelconque des revendications 1 à 9 comprenant en outre une étape d'estimation (E10) de ladite au moins une caractéristique d'un dit flux de données à transmettre associé audit équipement utilisateur à partir d'au moins un élément parmi :
- au moins un identifiant d'au moins une tranche de réseau à laquelle est attaché ledit équipement utilisateur ou autorisée pour ledit équipement utilisateur, et/ou au moins un service auquel est connecté ledit équipement utilisateur ou autorisé à se connecter ; et
- au moins une information fournie par ledit équipement utilisateur.

11. Procédé de contrôle selon l'une quelconque des revendications 1 à 10 comprenant en outre une étape d'apprentissage d'un modèle de prédiction de trafic pour ledit équipement utilisateur, ce modèle de prédiction étant utilisé par ladite entité du réseau pour déterminer ladite au moins une caractéristique d'un dit flux à transmettre associé audit équipement utilisateur.

12. Procédé de communication par un équipement utilisateur (3) d'un réseau de télécommunications, ledit procédé comprenant :
- une étape de réception (F10) d'une notification d'une fréquence dite de surveillance à laquelle ledit équipement utilisateur surveille un canal de contrôle, ajustée par une entité du réseau conformément à une étape d'ajustement d'un procédé de contrôle selon l'une quelconque des revendications 1 à 11, ledit canal de contrôle étant susceptible de véhiculer au moins un indicateur de partie de bande passante affectée audit équipement utilisateur ; et
- une étape de surveillance (F30) dudit canal de contrôle conformément à ladite fréquence de surveillance ajustée.

13. Procédé de communication selon la revendication 12 comprenant en outre lors de ladite étape de surveillance (F30), une détection dans ledit canal de contrôle d'au moins un indicateur de partie de bande affectée à l'équipement utilisateur à activer.

14. Procédé de communication selon la revendication 12 ou 13 dans lequel ladite notification est un message de configuration RRC, Radio Resource Control, envoyé par l'entité du réseau et comprenant une valeur d'une période avec laquelle réitérer la surveillance du canal de contrôle.

15. Entité (2,5) d'un réseau de télécommunications comprenant :
- un module (2A,5A), configuré pour obtenir, sur une période de temps déterminée, au moins une caractéristique de flux de données à transmettre, associés audit équipement utilisateur et relatifs à une pluralité de services auxquels est connecté simultanément ledit équipement utilisateur ;
- un module d'ajustement (2C,5C), configuré pour, si au moins un changement de partie de bande passante est requis pour transmettre lesdits flux de données relatifs à ladite pluralité de services, ajuster en fonction de ladite au moins une caractéristique une fréquence de surveillance d'un canal de contrôle susceptible de véhiculer au moins un indicateur de partie de bande passante affectée audit équipement utilisateur ;
- un module de notification (2D,5D), configuré pour notifier ladite fréquence de surveillance ajustée audit équipement utilisateur avant de signaler audit équipement utilisateur ledit au moins un changement de partie de bande passante ; et
- un module d'envoi (2E,5E), configuré pour envoyer des informations destinées à l'équipement utilisateur sur ledit canal de contrôle en fonction de ladite fréquence de surveillance ajustée.

16. Equipement utilisateur (3) d'un réseau de télécommunications comprenant :
- un module (3A) de réception, configuré pour recevoir une notification d'une fréquence dite de surveillance à laquelle ledit équipement utilisateur surveille un canal de contrôle, ajustée par un module d'ajustement d'une entité du réseau selon la revendication 15, ledit canal de contrôle étant susceptible de véhiculer au moins un indicateur de partie de bande passante affectée audit équipement utilisateur ; et
- un module (3B) de surveillance, configuré pour surveiller ledit canal de contrôle conformément à ladite fréquence de surveillance ajustée.

17. Système (1) de communication comprenant :
- au moins une entité (2,5) d'un réseau de télécommunications selon la revendication 15 ; et
- au moins un équipement utilisateur (3) selon la revendication 16, rattaché à ladite au moins une entité.
